# EUROPEAN PATENT SPECIFICATION

(11) **EP 2 882 213 B1**
(45) Date of publication and mention of the grant of the patent: **26.07.2017**
(21) Application number: 13826428.8
(22) Date of filing: 12.06.2013
(51) Int. Cl.: H04W 24/10, H04W 16/32, H04W 84/04

(54) **COMMUNICATION SYSTEM, MACRO BASE STATION, MOBILE TERMINAL, AND COMMUNICATION METHOD**
KOMMUNIKATIONSSYSTEM, MAKROBASISSTATION, MOBILES ENDGERÄT UND KOMMUNIKATIONSVERFAHREN
SYSTÈME DE COMMUNICATION, MACRO-STATION DE BASE, TERMINAL MOBILE ET PROCÉDÉ DE COMMUNICATION

(30) Priority: 31.07.2012 JP 2012170256
(43) Date of publication of application: 10.06.2015
(73) Proprietor: NTT Docomo, Inc., Tokyo 100-6150 (JP)
(72) Inventor: NAGATA, Satoshi, Tokyo 100-6150 (JP); KISHIYAMA, Yoshihisa, Tokyo 100-6150 (JP); TAKEDA, Kazuaki, Tokyo 100-6150 (JP); TAKAHASHI, Hideaki, Tokyo 100-6150 (JP); ABETA, Sadayuki, Tokyo 100-6150 (JP); NAKAMURA, Takehiro, Tokyo 100-6150 (JP); ISHII, Hiroyuki, Palo Alto, California 94304 (US)
(74) Representative: Hoffmann Eitle
(86) International application number: PCT/JP2013/066152
(87) International publication number: WO 2014/020996

(56) References cited:
- WO-A1-2011/118212
- WO-A2-2012/094608
- JP-A- 2010 062 770
- KDDI CORPORATION: "Remaining aspects of DMRS for ePDCCH", 3GPP DRAFT; R1-122535_EPDCCH_DMRS_KDDI, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Prague, Czech Republic; 20120521 - 20120525, 12 May 2012 (2012-05-12), XP050600734, [retrieved on 2012-05-12]
- SAMSUNG: "Discussions on CoMP architecture and CoMP Set Management Measurement", 3GPP DRAFT; R2-121716-COMP, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Jeju, Korea; 20120326 - 20120330, 19 March 2012 (2012-03-19), XP050606113, [retrieved on 2012-03-19]

## Description

### Technical Field

The present invention relates to a communication system, a macro base station apparatus, a mobile terminal apparatus and a communication method in a next-generation mobile communication system.

### Background Art

In a UMTS (Universal Mobile Telecommunications System) network, long-term evolution (LTE) is under study for the purposes of further increasing high-speed data rates, providing low delay, and so on (non-patent literature 1). In LTE, as multiple access schemes, a scheme that is based on OFDMA (Orthogonal Frequency Division Multiple Access) is used in downlink channels (downlink), and a scheme that is based on SC-FDMA (Single Carrier Frequency Division Multiple Access) is used in uplink channels (uplink).

Successor systems of LTE (referred to as, for example, "LTE-advanced" or "LTE enhancement" (hereinafter referred to as "LTE-A")) are under study for the purpose of achieving further broadbandization and increased speed beyond LTE. In Rel-10, which is one variation of LTE-A, an agreement has been reached to employ carrier aggregation, whereby a plurality of component carriers (CCs), in which the system band of the LTE system is one unit, are grouped to achieve broadbandization. With LTE-A of Rel-10 and later versions, achieving increased capacity by means of a heterogeneous network (HetNet) configuration, in which many small cells are overlaid in a macro cell, is under study.

### Citation List

### Non-Patent Literature

Non-Patent Literature 1: 3GPP TR 25.913 "Requirements for Evolved UTRA and Evolved UTRAN "

Document KDDI CORPORATION: "Remaining aspects of DMRS for ePDCCH", 3GPP DRAFT; R1-122535_EPDCCH_DMRS_KDDI, 3RD GENERATION PARTNERSHIP PROJECT (3GPP), MOBILE COMPETENCE CENTRE ; 650, 12 May 2012 relates to the possibility of transmitting an Enhanced Physical Downlink Control Channel, ePDCCH, with and without dynamic point selection. The document proposes, among other, to determine a parameter X in the scrambling sequence generator for ePDCCH demodulation reference signal equal to the parameter Y used to derive scrambling initialization for the determined channel state information reference signal configuration for ePDCCH transmission.

Document SAMSUNG: "Discussions on CoMP architecture and CoMP Set Management Measurement",3GPP DRAFT; R2-121716-COMP, 3RD GENERATION PARTNERSHIP PROJECT (3GPP), MOBILE COMPETENCE CENTRE ; 650, 19 March 2012 relates to a Coordinated Multipoint (CoMP) measurement set (CSM), that is a set of transmission points that mobile stations are required to measure and report. According to the document, the initial CSM measurement set is configured by the network based on deployment knowledge before a UE measures and reports TP measurement results. Then, upon reception of UE reports, the network can configure the CoMP measurement set for CSI feedbacks.

Document WO 2012/094608 A2 relates to methods and systems for determining and communicating channel state information for one or more transmission points. Further, the document also relates to determining transmission states by applying at least one transmission state parameter to channel state information (CSI) and to reporting CSI based on the transmission state and/or at least one transmission state parameter applied thereto.

### Summary of the Invention

### Technical Problem

In cellular systems such as W-CDMA, LTE (Rel. 8) and successor systems of LTE (for example, Rel. 9 and Rel. 10), the radio communication schemes (radio interface) are designed to support macro cells. In addition to cellular environments such as these, it is expected that, in the future, high-speed wireless services by means of near-field communication such as ones provided indoors, in shopping malls and so on will be provided. Consequently, there is a demand to design a new radio communication scheme that is specially customized for small cells, so that it is possible to secure capacity with small cells while securing coverage with macro cells.

The present invention has been made in view of the above, and it is therefore an object of the present invention to provide a communication system, a macro base station apparatus, a mobile terminal apparatus and a communication method which can provide highly efficient small cell radio access.

### Solution to Problem

The communication system of the present invention is a communication system comprising a macro base station apparatus that forms a macro cell, a plurality of local base station apparatuses that are connected with the macro base station apparatus via a communication link and that form small cells in the macro cell, and a mobile terminal apparatus that can communicate with the macro base station apparatus using a radio communication scheme for the macro cell, and that can communicate with each local base station apparatus using a radio communication scheme for the small cells, and in this communication system, each local base station apparatus transmits a reference signal to be used to detect the local base station apparatuses, to the mobile terminal apparatus, in the radio communication scheme for the small cells, the macro base station apparatus transmits first control information, in which information that is required for measurements and reporting of reference signals transmitted from each local base station apparatus is defined, to the mobile terminal apparatus, and, the mobile terminal apparatus measures the reference signals transmitted from each local base station apparatus based on the first control signal, and reports measurement results to the macro base station apparatus or the small cell base station apparatuses. The macro base station apparatus transmits the first control information to the mobile terminal apparatus via each local base station apparatus or alternatively the macro base station apparatus transmits a part of the first control information to the mobile terminal apparatus directly, and transmits another part of the first control information to the mobile terminal apparatus via each local base station apparatus.

### Technical advantage of the Invention

According to the present invention, it is possible to provide highly efficient small cell radio access that is specially customized for small cells.

### Brief Description of the Drawings

FIG. 1 is a diagram to show a configuration to place many small cells in a macro cell;
FIG. 2A is a HetNet configuration diagram, in which a macro cell and small cells are operated using the same carrier, and FIG. 2B is a HetNet configuration diagram, in which a macro cell and small cells are operated using different carriers;
FIG. 3A is a conceptual diagram to show a first example of reporting of control information for receiving DISCOVERY SIGNALS, and FIG. 3B is a conceptual diagram to show a second example of reporting of control information for receiving DISCOVERY SIGNALS;
FIG. 4 is a conceptual diagram of reporting of control information related to DISCOVERY SIGNAL MEASUREMENTS;
FIG. 5A is a conceptual diagram to show a first example of reporting of control information related to CSI, and FIG. 5B is a conceptual diagram to show a second example of reporting of control information related to CSI;
FIG. 6A is a conceptual diagram to show a first example of determining local stations for data channel (control channel) transmission based on CSI, and FIG. 6B is a conceptual diagram to show a second example of determining local stations for data channel (control channel) transmission based on CSI;
FIG. 7A is a conceptual diagram to show a first example of determining local stations for data channel (control channel) transmission based on MEASUREMENT reports, and FIG. 7B is a conceptual diagram to show a second example of determining local stations for data channel (control channel) transmission based on MEASUREMENT reports;
FIG. 8 is a diagram to explain a system configuration of a radio communication system;
FIG. 9 is a diagram to show an overall configuration of a mobile terminal apparatus;
FIG. 10 is a diagram to show an overall configuration of a macro cell base station apparatus; and
FIG. 11 is a diagram to show an overall configuration of a small cell base station apparatus.

### Description of Embodiments

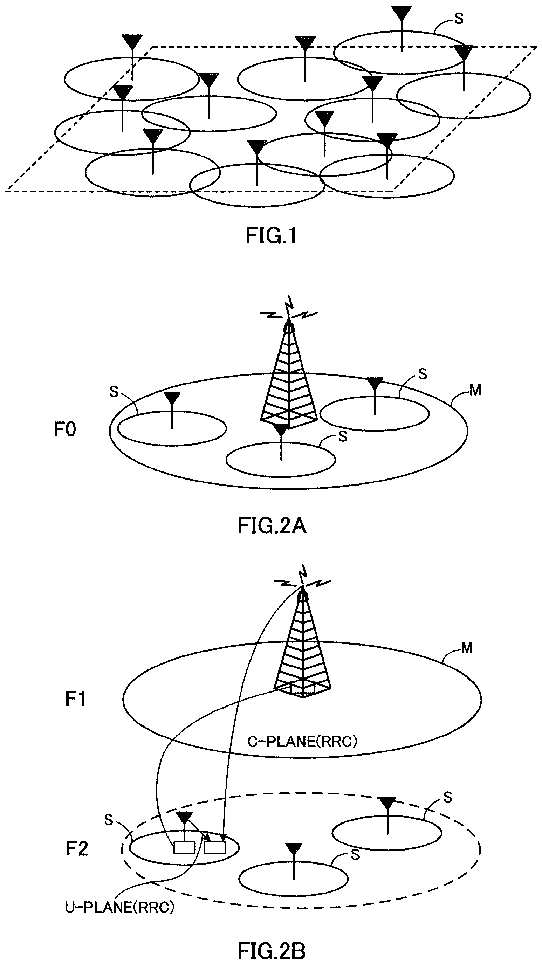

As shown in FIG. 1, although, in a heterogeneous network configuration, many small cells are placed in a macro cell area, when many small cells S are placed in a macro cell area, it is necessary to design the small cells S taking into account capacity versus network costs. Network costs may include, for example, the cost of installing network nodes, backhaul links and so on, the operation cost for cell planning and maintenance support, the power consumption on the network side, and so on. As a demand apart from capacity, small cells S are required to support saved power consumption on the mobile terminal apparatus side, random cell planning, and so on.

The present invention is applicable to the two kinds of heterogeneous networks shown in FIGs. 2A, and 2B.

In the HetNet configuration shown in FIG. 2A, the macro cell M and the small cells S are operated using the same carrier (frequency F0). In the 3GPP, inter-cell interference control (eICIC: enhanced Inter-Cell Interference Coordination) techniques in HetNet have been under study. As a result of this, eICIC in the time domain has been agreed upon. Interference coordination in the time domain (in subframe units) is also applicable to single-carrier communication as well. Interference is reduced by using almost-blank subframes (subframes that do not transmit data) or MBSFN (multimedia broadcast multicast service over single-frequency network) subframes as non-transmission periods.

In the HetNet configuration shown in FIG. 2B, the macro cell M and the small cells S are operated using different frequencies (F1 and F2). To operate the macro cell M and the small cells S with different frequencies (F1 and F2), carrier aggregation defined in LTE-A may be used. In Rel-10, carrier aggregation to group a plurality of component carriers (CCs) for broadbandization, where the system band of the conventional system (LTE) is one unit, is defined. The HetNet configuration shown in FIG. 2B represents a concept to adopt a radio interface (NCT: New Carrier Type) that has no conventional concept of cell IDs and that is specially customized for user data transmission, in small cells S. The HetNet configuration shown in FIG. 2B supports C (Control)-plane to transmit control signals and U (User)-plane to transmit user data, separately, between the macro cell M and the small cells S. In particular, by operating the macro cell M in a conventional LTE frequency band (for example, the 2 GHz band) and the small cells S in a frequency band (for example, the 3.5 GHz band) that is higher than that of the macro cell M, it is possible to maintain high connectivity against the mobility of mobile stations (UE: User Equipment), and, by using a wide bandwidth, realize high-speed communication that does not produce interference between the macro cells and the small cells. Furthermore, by employing NCT, which removes cell-specific signals (CRSs and so on), many advantages are achieved, such as simplified cell planning, energy saving, flexible application of CoMP (Coordinated Multi-Point) techniques and so on. The macro cell M supports C-plane and U-plane together, and achieves transmission quality even with UEs without nearby small cells.

Referring to the HetNet configuration shown in FIG. 2B, there may be differences in requirements and configurations between the macro cell and the small cells. The macro cells have a limited bandwidth, and therefore spectral efficiency is very important. By contrast with this, the small cells can take up a wide bandwidth easily, so that, as long as a wide bandwidth is secured, the importance of spectral efficiency is not as high as it is for the macro cell. While the macro cell needs to support high mobility such as typified by cars, the small cells have only to support low mobility. The macro cell needs to secure a wide coverage. Although the small cells should preferably secure a wide coverage as well, the macro cell can cover up the shortage of coverage.

Although, in the macro cell, there is a significant power difference between the uplink and the downlink and the uplink and the downlink are asymmetrical, in the small cells, there is little power difference between the uplink and the downlink and the uplink and the downlink are made nearly symmetrical. In the macro cell, the number of connecting users per cell is large, and, furthermore, cell planning is executed, so that there is little variation of traffic. In the small cells, the number of connecting users per cell is low, and, furthermore, cell planning may not be executed, and therefore traffic varies significantly. In this way, the optimal requirements for the small cells are different from those of the macro cell, and therefore there is a need to design a radio communication scheme that is specially customized for small cells.

Considering interference that arises from saved power consumption and random cell planning, it is preferable to configure the radio communication scheme for small cells to assume non-transmission while there is no traffic. Consequently, the radio communication scheme for small cells may be designed as UE-specific as possible. Consequently, the radio communication scheme for small cells may be designed based on EPDCCHs (Enhanced Physical Downlink Control Channels) and DM-RSs (Demodulation - Reference Signals), without using the PSS/SSS (Primary Synchronization Signal/Secondary Synchronization Signal), CRSs (Cell-specific Reference Signals) and the PDCCH (Physical Downlink Control Channel) in LTE.

An EPDCCH refers to a predetermined frequency band in the PDSCH region (data signal region) that is used as a PDCCH region (control signal region). EPDCCHs that are allocated to the PDSCH region are demodulated using DM-RSs. An EPDCCH may be referred to as an "FDM-type PDCCH" or may be referred to as a "UE-PDCCH." Although a new carrier frequency that is different from conventional carrier frequencies is used in the radio communication scheme for small cells, this new carrier frequency may be referred to as an "additional carrier," or may be referred to as an "extension carrier."

If everything in the radio communication scheme for small cells is designed UE-specific, a mobile terminal apparatus has no opportunity to gain initial access to small cells. Consequently, in the radio communication scheme for small cells, there may be a need to provide cell-specific reference signals for selecting small cells that are suitable for data channel (control channel) communication with individual mobile terminal apparatuses.

The present inventors have focused on technical problems regarding how, in a network configuration in which there are many small cells as candidates which a mobile terminal apparatus may access, the mobile terminal apparatus should receive cell-specific reference signals, measure the cell-specific reference signals and send MEASUREMENT reports to the network side (the macro base station or the local base stations), and have arrived at the present invention.

In the following description, the cell-specific reference signals that are transmitted from small cells so as to allow a mobile terminal apparatus to find small cells that are suitable for data channel (and/or control channel) transmission will be referred to as "DISCOVERY SIGNALS." A "DISCOVERY SIGNAL" may also be referred to as, for example, a PDCH (Physical Discovery Channel), a BS (Beacon Signals) and a DPS (Discovery Pilot Signals). A base station apparatus to constitute a macro cell will be referred to as a "macro station," and a base station apparatus to constitute a small cell will be referred to as a "local station."

A first aspect of the present disclosure provides a communication system in which control information (first control information) for receiving small cell-specific DISCOVERY SIGNALS is reported to a mobile terminal apparatus by means of MEASUREMENT CONFIGURATION (information related to measurements). The local stations transmit small cell-specific DISCOVERY SIGNALS, and the mobile terminal apparatus receives MEASUREMENT CONFIGURATION from the macro station or the local stations, which contains control information for receiving the DISCOVERY SIGNALS. The mobile terminal apparatus receives the DISCOVERY SIGNALS based on the control information reported by the MEASUREMENT CONFIGURATION.

By this means, control information for receiving DISCOVERY SIGNALS is reported from the macro station or from the local stations to the mobile terminal apparatus by means of MEASUREMENT CONFIGURATION, so that the mobile terminal apparatus can receive DISCOVERY SIGNALS from the local stations, to which the mobile terminal apparatus is unable to gain initial access, and measure the received signal power of the DISCOVERY SIGNALS and so on with respect to each local station (hereinafter referred to as "MEASUREMENTS").

A second aspect of the present disclosure provides a communication system, in which control information (second control information) for allowing a mobile terminal apparatus to feed back channel state information (CSI information) (CQIs, PMIs, RIs and so on) is reported to the mobile terminal apparatus by means of RRC CONNECTION RECONFIGURATION. The macro station or the local stations select local stations of high received quality based on DISCOVERY SIGNAL MEASUREMENT reports. That is, local stations of high received quality are selected as local stations whose CSI information (CQIs, PMIs, RIs and so on) is going to be fed back. The mobile terminal apparatus receives the RRC CONNECTION RECONFIGURATION, containing local station information for feeding back CSI information (CQIs, PMIs and RIs).

By this means, the mobile terminal apparatus can acquire CSI information with respect to the local stations reported in the RRC CONNECTION RECONFIGURATION, and feeds this back to the macro station or to the local stations.

A third aspect of the present disclosure provides a communication system in which the local stations to perform data channel and/or control channel transmission with a mobile terminal apparatus are determined based on CSI information (or DISCOVERY SIGNAL MEASUREMENT reports), and control information to command data channel and/or control channel transmission is reported to the determined local stations. The macro station or the local stations determine the local stations to perform data channel and/or control channel transmission based on CSI information (or DISCOVERY SIGNAL MEASUREMENT reports) fed back from the mobile terminal apparatus. The local stations start data channel and/or control channel transmission with a mobile terminal apparatus designated by the macro station.

By this means, a mobile terminal apparatus having no opportunity to gain initial access to small cells can start data channel and/or control channel transmission with local stations that are determined based on CSI information (or DISCOVERY SIGNAL MEASUREMENT reports).

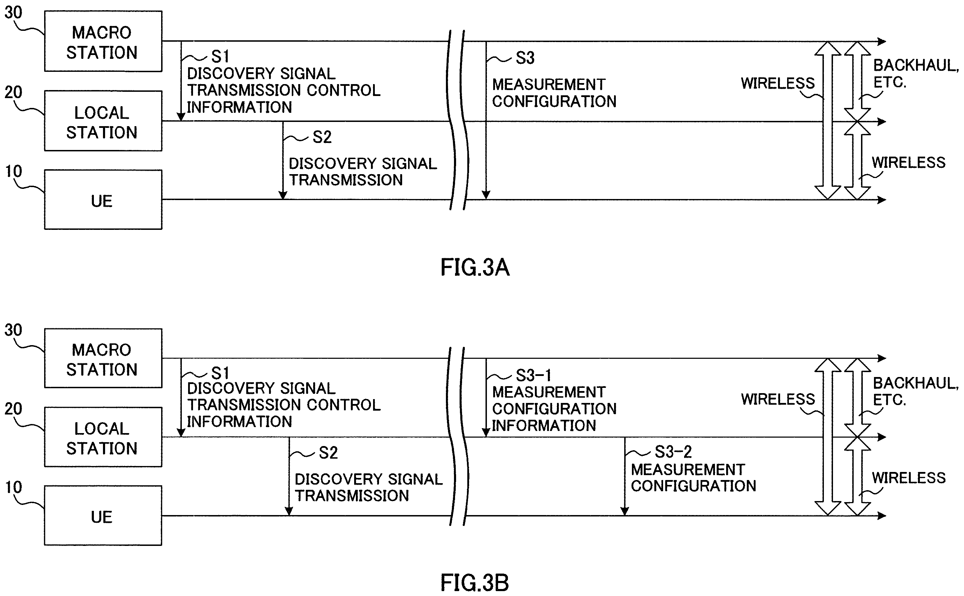

Next, the first aspect of the present disclosure will be described in detail. The MEASUREMENTS of DISCOVERY SIGNAL in small cells will be described with reference to FIGs. 3A and 3B.

A macro station 30 and a mobile terminal apparatus 10 are connected via a radio link, and local stations 20 and the mobile terminal apparatus 10 are connected via radio links. The macro station 30 and the local stations 20 are connected via cables (Faber backhauls) or radio links (wireless backhauls). An X2 interface or other interfaces may be used as the interface between the macro station 30 and the local stations 20. Other interfaces may be, as shown in FIG. 2B, an enhanced model of an X2 interface that is designed so that part of the functions follow commands from the macro station. In the following description, a case of employing an enhanced interface, in which part of the functions follow commands from the macro station, will be primarily described.

In the LTE-A system, for the mobile terminal apparatus 10 to start transmitting and receiving the data channel/control channel with the base stations (the macro station 30 or the local stations 20), the following steps take place:

### (1) Establishing synchronization

The mobile terminal apparatus 10 receives synchronization signals transmitted from the base stations, and establishes synchronization with the base stations.

### (2) MEASUREMENTS

The mobile terminal apparatus 10 receives broadcast signals transmitted from the base stations, and measures the received signal power from the base stations (MEASUREMENTS). The mobile terminal apparatus 10 measures received signal power with respect to a plurality of cells, and reports the measurement results to the base stations in the form of MEASUREMENT reports. Although will be described later, "MEASUREMENTS" herein is by no means limited to the measurement of received signal power.

### (3) CSI feedback

The mobile terminal apparatus 10 receives user-specific downlink reference signals (CSI-RSs), measures channel quality, and feeds back CSI information (CQIs, PMIs, RIs and so on) to the base stations.

### (4) Data channel/control channel transmission

The base stations allocate resources to the data channel/control channel to transmit to the mobile terminal apparatus 10 based on the CSI information, and transmits the data channel/control channel to the mobile terminal apparatus 10.

A case will be described here where the mobile terminal apparatus 10 having received small cell-specific DISCOVERY SIGNALS transmitted from the local stations 20 transmits MEASUREMENT reports. After having received the synchronization signal transmitted from the macro station 30 and established synchronization with the macro station 30, the mobile terminal apparatus 10 needs to measure the small cell-specific DISCOVERY SIGNALS transmitted from the local stations 20 and send MEASUREMENT reports to the macro station 30. That is, setting for receiving the small cell-specific DISCOVERY SIGNALS is required in the mobile terminal apparatus 10. The present disclosure provides setting for receiving DISCOVERY SIGNALS in the mobile terminal apparatus 10 by means of MEASUREMENT CONFIGURATION.

Consequently, the macro station 30 applies transmission setting for transmitting small cell-specific DISCOVERY SIGNALS to each local station 20. The macro station 30 generates specific control information for DISCOVERY SIGNAL transmission, on a per small cell basis (hereinafter referred to as "DS transmission control information"). The DS transmission control information is configured to contain the radio resources, the signal sequence, the carrier frequency and the bandwidth of the DISCOVERY SIGNAL, and other pieces of setting information related to the DISCOVERY SIGNAL. The signal sequence of the DISCOVERY SIGNAL is set per small cell, so that each small cell is identified by this signal sequence.

Signals having the following characteristics may be used as DISCOVERY SIGNALS.
(a) The synchronization signals (PSS: Primary Synchronization Signal, and SSS: Secondary Synchronization Signal) defined in LTE (Rel-8) may be used.
(b) Signals that use the same sequences as the synchronization signals defined in LTE (Rel-8) and that are multiplexed in different locations along the time/frequency direction may be used. For example, signals in which the PSS and the SSS are multiplexed in different slots may be used.
(c) DISCOVERY SIGNALS that are defined anew to select small cells may be used. For example, signals having characteristics of having a long transmission cycle and having a large amount of radio resources per transmission unit, compared to the synchronization signals (PSS and SSS) defined in LTE (Rel-8), may be used.
(d) Conventional reference signals (CSI-RS, CRS, DM-RS, PRS, SRS) defined in LTE-A (Rel-10) may be used. Part of the conventional reference signals (for example, a signal to transmit the CRS of one port in a 5-msec cycle) may be used.

It is equally possible to generate DISCOVERY SIGNALS by combining the above signals (a) to (d) in an arbitrary fashion.

The macro station 30 reports DS transmission control information to each local station 20 via a backhaul link (step S1). To be more specific, the DS transmission control information contains the radio resources, the signal sequence, the carrier frequency and the bandwidth of the DISCOVERY SIGNAL, and other pieces of setting information related to the DISCOVERY SIGNAL. The signal sequence of the DISCOVERY SIGNAL is set per small cell.

Each local station 20 receives DS transmission control information from the macro station 30 via a backhaul link (step S1). Each local station 20 sets parameters for transmitting the DISCOVERY SIGNAL in pertaining functional elements, based on the radio resources, the signal sequence, the carrier frequency, and the bandwidth of the DISCOVERY SIGNAL, and other pieces of setting information, contained in the DS transmission control information that is received. It is equally possible to provide setting for transmitting DISCOVERY SIGNALS in the local stations 20 in advance, without sending DS transmission control information from the macro station 30.

Based on the DS transmission control information, each local station 20 controls the radio resources, the signal sequence, the carrier frequency, the bandwidth and so on, and transmits a small cell-specific DISCOVERY SIGNAL (step S2).

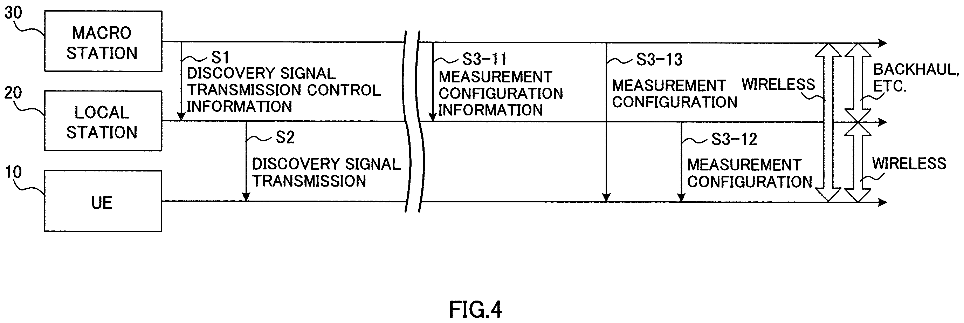

Next, by means of MEASUREMENT CONFIGURATION, setting for receiving the DISCOVERY SIGNALS (including setting related to MEASUREMENT reports) is provided in the mobile terminal apparatus 10 (step S3). Consequently, control information for receiving the DISCOVERY SIGNALS (hereinafter referred to as "DS reception control information") is reported from the network side to the mobile terminal apparatus 10. As methods of reporting DS reception control information to the mobile terminal apparatus 10, the three methods illustrated in FIG. 3A, FIG. 3B and FIG. 4 are applicable.

With the method illustrated in FIG. 3A, the macro station 30 reports MEASUREMENT CONFIGURATION, in which DS reception control information is contained, to the mobile terminal apparatus 10 via a radio link (step S3). The DS reception control signal is configured to contain, for example, the radio resources, the signal sequences, the carrier frequencies, and the bandwidths of DISCOVERY SIGNALS, and other pieces of information related to the DISCOVERY SIGNALS. The control information may include information about the recipient to which MEASUREMENT reports, formed with the measurement results of the received signal power and so on of the DISCOVERY SIGNALS, are to be sent.

For example, while in an idle state, the mobile terminal apparatus 10 receives MEASUREMENT CONFIGURATION, in which a DS reception control signal is contained, from the macro station 30. The mobile terminal apparatus 10 applies setting for receiving DISCOVERY SIGNALS based on the DS reception control signal. That is, by acquiring setting information such as the radio resources, the signal sequences, the carrier frequencies and the bandwidths of DISCOVERY SIGNALS, the mobile terminal apparatus 10 enters a state in which the mobile terminal apparatus 10 can receive DISCOVERY SIGNALS from the local stations 20, based on the setting information.

The mobile terminal apparatus 10 may prepare MEASUREMENT reports with respect to all the local stations 20, or may prepare MEASUREMENT reports with respect to part of the local stations 20. For example, to limit the number of local stations subject to DISCOVERY SIGNAL measurements, it may be possible to include limitation information for limiting the number of local stations, in the MEASUREMENT CONFIGURATION. The limitation information to limit the number of local stations may be formed with local station information related to at least one local station whose DISCOVERY SIGNAL is subject to MEASUREMENTS (such as the local station ID, DISCOVERY SIGNAL information (the radio resources, the signal sequence, the carrier frequency, the bandwidth and so on)).

A case will be assumed here where DISCOVERY SIGNAL MEASUREMENTS are carried out with respect to all of 1000 local stations unless the number of local stations is limited. Given that, for example, the geographic location of the mobile terminal apparatus 10 is the reference location, the macro station 30 selects a predetermined number of (for example, fifty) local stations that are geographically close to this reference location. Local station information regarding the fifty local stations that are selected is contained in the control information of the MEASUREMENT CONFIGURATION as limitation information.

Alternatively, the macro station 30 may make the number of local stations to report at one time a fixed number, select the fixed number of local stations (for example, fifty local stations), and include local station information with respect to the fifty local stations that are selected, in the DS reception control signal, as limitation information. The macro station 30, maintaining the number of local stations to select, shifts the local stations to be subject to selection, selects the next fifty local stations, and includes local station information with respect to the fifty local stations selected, in the DS reception control signal. The local station 30 repeats selecting a fixed number of local stations until all the local stations are selected.

The mobile terminal apparatus 10 receives the MEASUREMENT CONFIGURATION, which contains the limitation information to limit the number of local stations whose DISCOVERY SIGNALS should be measured. Based on the limitation information, the mobile terminal apparatus 10 can be prepared to receive and measure the DISCOVERY SIGNALS transmitted from the limited local stations.

The macro station 30 can include local station information (formed with, for example, local station identification numbers) specifying the local stations (one local station or a plurality of local stations) whose DISCOVERY SIGNALS are not subject to MEASUREMENTS, in the MEASUREMENT CONFIGURATION, as limitation information. That is, besides the control information that is formed by including the radio resources, the signal sequences, the carrier frequencies and the bandwidths of the DISCOVERY SIGNALS corresponding to all local stations, the local stations (one local station or a plurality of local stations) whose DISCOVERY SIGNALS are not subject to MEASUREMENTS are reported as local station information.

The mobile terminal apparatus 10 excludes the local stations specified in the limitation information reported in the MEASUREMENT CONFIGURATION from the objects of DISCOVERY SIGNAL reception and measurements, and receives the DISCOVERY SIGNALS and carry out MEASUREMENTS with respect to the rest of the local stations.

The parameters contained in the MEASUREMENT CONFIGURATION will be described. In the MEASUREMENT CONFIGURATION, a plurality of parameters -- for example, "measurement objects," "reporting configurations," "measurement identities," "quantity configurations" and "measurement gaps" -- may be included. "Measurement objects" defines the objects (carriers and carrier sets) which the mobile terminal apparatus 10 has to measure for MEASUREMENT reports. "Reporting configurations" is the list of report information that is formed with the basis to trigger the transmission of MEASUREMENT reports from the mobile terminal apparatus 10, and the reporting format. "Measurement identities" is the list of identification numbers that are linked with individual measurement objects. "Quantity configurations" defines the quantity of measurements. "Measurement gaps" is the interval of measurements in the mobile terminal apparatus 10. The MEASUREMENT CONFIGURATION is defined in detail in 3GPP TS 36.331, 5.5.2.

The MEASUREMENT CONFIGURATION that is applicable to the present disclosure may define small cell-specific DS reception control signals in addition to conventional parameters, and/or re-use part of the conventional parameters as a DS reception control signal.

With the method illustrated in FIG. 3B, MEASUREMENT CONFIGURATION is reported from the local stations 20 to the mobile terminal apparatus 10. When the macro station 30 generates a DS reception control signal, MEASUREMENT CONFIGURATION to include this control information is reported from the macro station 30 to the mobile terminal apparatus 10 via the local stations 20.

To allow the mobile terminal apparatus 10 to receive MEASUREMENT CONFIGURATION from local stations 20 which have not established connection with this mobile terminal apparatus 10, it is necessary that the macro station 30 and the local stations 20 are synchronized, and that the mobile terminal apparatus 10 has established synchronization with the macro station 30.

With the method illustrated in FIG. 3B, the macro station 30 reports MEASUREMENT CONFIGURATION, which contains a DS reception control signal, to the local stations 20, via a backhaul link (step S3-1). The local stations 20 report the MEASUREMENT CONFIGURATION to the mobile terminal apparatus 10 via radio links (step S3-2).

With the method illustrated in FIG. 4, a part of the DS reception control signal is reported from the macro station 30 to the mobile terminal apparatus 10, and the other parts of the control information is reported from the local stations 20 to the mobile terminal apparatus 10.

The macro station 30 reports the part of the DS reception control signal to the mobile terminal apparatus 10 using the MEASUREMENT CONFIGURATION (step S3-13). The macro station 30 reports the other parts of the DS reception control signal to the local stations 20 using the MEASUREMENT CONFIGURATION (step S3-11). The local stations 20 report another part of the control information to the mobile terminal apparatus 10 using the MEASUREMENT CONFIGURATION (step S3-12). As noted earlier, the DS reception control signal is configured to contain information for receiving DISCOVERY SIGNALS from the local stations 20, such as the radio resources, the signal sequences, the carrier frequencies and the bandwidths of the DISCOVERY SIGNALS, and local station information (for example, local station IDs and DISCOVERY SIGNAL information) related to the local stations whose DISCOVERY SIGNALS are to be measured (or not to be measured). So, in the DS reception control signal, the information for receiving DISCOVERY SIGNALS from the local stations 20 is reported directly from the macro station 30 to the mobile terminal apparatus 10 (step S3-13), and the local station information (for example, local station IDs and DISCOVERY SIGNAL information) is reported from the local stations 20 to the mobile terminal apparatus 10 (step S3-12). By this means, it is possible to transmit the DS reception control signal efficiently.

Although, in the example shown in FIG. 4, the local stations 20 receive MEASUREMENT CONFIGURATION containing local station information from the macro station 30 in step S3-11, the local stations 20 may as well be configured to report MEASUREMENT CONFIGURATION containing local station information to the mobile terminal apparatus 10, based on its own judgment, without receiving commands from the macro station 30.

Next, the second aspect of the present disclosure will be described in detail. The mobile terminal apparatus 10 reports DISCOVERY SIGNAL MEASUREMENT reports to the designated recipient.

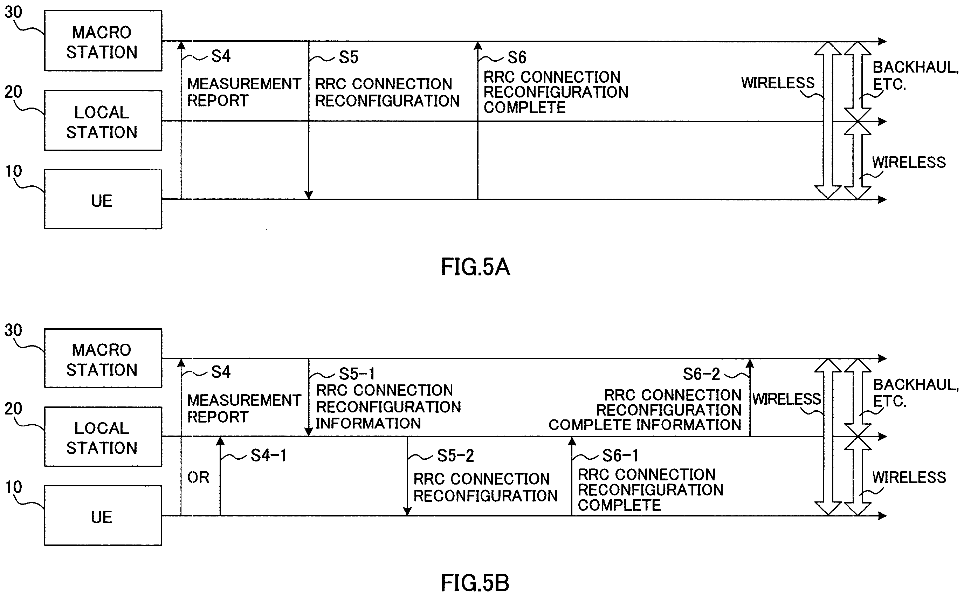

The reporting method of DISCOVERY SIGNAL MEASUREMENT reports and the reporting method of local station information for feeding back CSI information in the mobile terminal apparatus 10 will be described with reference to FIGs. 5A and 5B.

With the reporting method illustrated in FIG. 5A, the mobile terminal apparatus 10 sends DISCOVERY SIGNAL MEASUREMENT reports to the macro station 30 (step S4). When MEASUREMENT reports are sent from the mobile terminal apparatus 10 to the local stations 20, the MEASUREMENT reports are transferred from the local stations 20 to the macro station 30.

Received signal power (RSRP: Reference Signal Received Power), received quality (RSRQ: Reference Signal Received Quality), the received signal-to-interference and noise ratio (RSSI: Received Signal Strength Indicator), CQIs (Channel Quality Indicators), PMIs (Precoding Matrix Indicators), and RIs (Rank Indicators) are the objects of the DISCOVERY SIGNAL MEASUREMENTS in the mobile terminal apparatus 10. The MEASUREMENTS of RSRP, RSRQ or RSSI are carried out primarily to select local stations (small cells). The MEASUREMENTS of CQIs, PMIs and RIs are carried out primarily to determine the local stations to perform data channel or control channel transmission.

In an idle state, the mobile terminal apparatus 10 receives DISCOVERY SIGNALS from each local station 20 in accordance with control information that is reported in MEASUREMENT CONFIGURATION. The mobile terminal apparatus 10 conducts MEASUREMENTS of RSRP, RSRQ or RSSI, with respect to the DISCOVERY SIGNALS received from each local station 20. RSRP, RSRQ and RSSI may be all made the objects of MEASUREMENTS, or part of them may be made the objects.

As described above, the mobile terminal apparatus 10 acquires local station information of local stations 20 transmitting DISCOVERY SIGNALS and the radio resources, the signal sequences, the carrier frequencies and the bandwidths of the DISCOVERY SIGNALS by means of MEASUREMENT CONFIGURATION. The mobile terminal apparatus 10 conducts MEASUREMENTS of the RSRP (and/or RSRQ and RSSI) of the DISCOVERY SIGNALS, on a per local station basis, based on the radio resources, the signal sequences, the carrier frequencies and the bandwidths of the small cell-specific DISCOVERY SIGNALS. The mobile terminal apparatus 10 conducts MEASUREMENTS of small cell-specific DISCOVERY SIGNALS with respect to all the local stations that have been reported as measurement objects. The mobile terminal apparatus 10 can measure RSRP and so on, in a cycle designated by the parameter "measurement gaps" contained in the MEASUREMENT CONFIGURATION. When limitation information in which the local stations to be excluded from the DISCOVERY SIGNAL measurement objects is written is reported by means of the MEASUREMENT CONFIGURATION, the DISCOVERY SIGNALS transmitted from these excluded local stations are not measured. Alternatively, it is also possible to measure the RSRP and so on of DISCOVERY SIGNALS with respect to the local stations to be excluded, and still not include these in MEASUREMENT reports.

The mobile terminal apparatus 10 can prepare MEASUREMENT reports based on the parameter "reporting configurations" contained in the MEASUREMENT CONFIGURATION. In the MEASUREMENT reports, the RSRP and so on, measured per small cell (local station), and identifiers corresponding to the parameter "measurement identities" are set in association with each other. The reporting format of the MEASUREMENT reports may follow the parameter "reporting configurations."

The mobile terminal apparatus 10 prepares MEASUREMENT reports with respect to the DISCOVERY SIGNALS of all local stations 20. In this case, MEASUREMENTS are conducted for the RSRP and so on of the DISCOVERY SIGNALS of all local stations, and the measurement results are written in MEASUREMENT reports.

The mobile terminal apparatus 10 may conduct MEASUREMENTS for the RSRP and so on of the DISCOVERY SIGNALS of all local stations, and prepare MEASUREMENT reports only with respect to the local stations of the top N measurement results. By this means, it is possible to reduce the volume of uplink transmission data compared to the case of transmitting MEASUREMENT reports with respect to all local stations.

Only with respect to the local stations that are reported in advance in the MEASUREMENT CONFIGURATION (which includes limitation information to limit the local stations to be measurement objects), may the mobile terminal apparatus 10 conduct MEASUREMENTS of the RSRP and so on of the DISCOVERY SIGNALS of the local stations and prepare MEASUREMENT reports. By this means, it is possible to reduce the number of times to measure DISCOVERY SIGNALS in the mobile terminal apparatus 10, and reduce the load of the mobile terminal apparatus 10.

Next, the macro station 30 selects the local stations (small cells) to request CSI information feedback from, based on the MEASUREMENT reports. Consequently, the macro station 30 receives the DISCOVERY SIGNAL MEASUREMENT reports transmitted from the mobile terminal apparatus 10 on the uplink (step S4). The macro station 30 narrows down the local stations whose CQIs, PMIs and RIs should be subjected to MEASUREMENTS in the mobile terminal apparatus 10, from the DISCOVERY SIGNAL MEASUREMENT report of each local station 20 reported. For example, the macro station 30 may select the top M local stations where the RSRP and so on of the DISCOVERY SIGNALS are good (which may also be referred to as "small cell candidate selection").

Next, the macro station 30 reports local station information to the mobile terminal apparatus 10 by means of RRC CONNECTION RECONFIGURATION so that CSI information (CQIs, PMIs, RIs) pertaining to the M selected local stations is fed back to the macro station 30.

The RRC CONNECTION RECONFIGURATION will be described. In the LTE system, a mobile terminal apparatus sends MEASUREMENT reports for a plurality of cells (base stations) to base stations. The cells to establish RRC connections with the mobile terminal apparatus are changed based on the MEASUREMENT reports. The base stations re-configure the configuration of the RRC connections established between the mobile terminal apparatus and each cell based on the MEASUREMENT reports. In the 3GPP, RRC CONNECTION RECONFIGURATION is defined to re-configure RRC connections.

In this processing step, first, the mobile terminal apparatus 10 transmits a RACH PREAMBLE to the macro station 30. Upon receiving the RACH PREAMBLE, the macro station 30 transmits a RACH RESPONSE to the mobile terminal apparatus 10. Nest, the mobile terminal apparatus 10 transmits an RRC CONNECTION REQUEST (message 3) to the macro station 30. Upon receiving the RRC CONNECTION REQUEST (message 3), the macro station 30 transmits an RRC CONNECTION SETUP (message 4) to the mobile terminal apparatus 10.

Upon receiving the RRC CONNECTION SETUP (message 4), the mobile terminal apparatus 10 transmits an RRC CONNECTION SETUP COMPLETE to the macro station 30. Upon receiving the RRC CONNECTION SETUP COMPLETE, the macro station 30 transmits an INITIAL UE MESSAGE to a mobility management node MME, which is a higher station apparatus. By this means, authentication and NAS security procedure are performed between the mobile terminal apparatus 10 and the mobility management node MME. After that, the mobility management node MME transmits an INITIAL CONTEXT SETUP REQUEST to the macro station 30.

When UE CAPABILITY is not included in the INITIAL CONTEXT SETUP REQUEST, the macro station 30 transmits a UE CAPABILITY ENQUIRY to the mobile terminal apparatus 10. Upon receiving the UE CAPABILITY ENQUIRY, the mobile terminal apparatus 10 transmits UE CAPABILITY INFORMATION to the macro station 30. Then, the macro station 30 transmits a UE CAPABILITY INFO INDICATION to the mobility management node MME.

Next, the macro station 30 transmits a SECURITY MODE COMMAND to the mobile terminal apparatus 10. After that, the macro station 30 transmits RRC CONNECTION RECONFIGURATION, which contains information defined in LTE-A as parameters, to the mobile terminal apparatus 10. Upon receiving the RRC CONNECTION RECONFIGURATION, the mobile terminal apparatus 10 transmits an RRC CONNECTION RECONFIGURATION COMPLETE to the macro station 30. After the RRC CONNECTION RECONFIGURATION COMPLETE is received -- that is, after an AMBIGUITY PERIOD in which it is possible to decide that the CONFIGURATION of information (parameters) defined in the LTE-A system has been identified is over -- the macro station 30 adopts that CONFIGURATION.

As shown in FIG. 5A, the macro station 30 reports control information that contains parameters defined in the LTE-A system and local station information for allowing the mobile terminal apparatus 10 to feed back CSI information, independently, to the mobile terminal apparatus 10, by the RRC CONNECTION RECONFIGURATION (step S5). The local station information contains the local station IDs, the signal sequence information of the DISCOVERY SIGNALS transmitted from the local stations, and so on. The RRC CONNECTION RECONFIGURATION may furthermore contain information for reporting C-PLANE and or U-PLANE.

The RRC CONNECTION RECONFIGURATION contains the following parameters defined in the LTE system/LTE-A system:
(1) Downlink control channel information related to the EPDCCH
(2) Cell-specific reference signal information related to cell-specific reference signals
(3) Sequence information related to the initial pseudo-random sequence of downlink reference signals
(4) Uplink reference signal information related to uplink DM-RSs (Demodulation-Reference Signals)
(5) Radio resource information related to radio resources for interference estimation, used to measure channel quality in the mobile terminal apparatus
(6) The base stations (macro station or local stations) to be the recipients to which CSI information should be fed back

The radio resource information of above (5) is information related to the radio resources to use in channel quality (CQI) measurements in the mobile terminal apparatus 10. CQIs are measured in the mobile terminal apparatus 10 using CSI-RSs transmitted from the macro station 30. As the CSI-RSs, non-zero power CSI-RSs and zero power CSI-RSs are defined. Non-zero power CSI-RSs distribute transmission power to the resources where the CSI-RSs are allocated, while, with zero power CSI-RSs, transmission power is not distributed to the resources where the CSI-RSs are allocated (the CSI-RSs are muted).

When calculating CQIs based on CSI-RSs, the accuracy of interference measurement is important. By using CSI-RSs, which are user-specific reference signals, it is possible to separate the CSI-RSs from a plurality of transmission points in the mobile terminal apparatus 10, and therefore interference measurement based on CSI-RSs is promising.

Consequently, the macro station 30 reports information about the interference estimation radio resources to use in channel quality (CQI) measurements in the mobile terminal apparatus, to the mobile terminal apparatus 10, as radio resource information (parameters).

After that, as shown in FIG. 5A, upon receiving the RRC CONNECTION RECONFIGURATION, the mobile terminal apparatus 10 transmits an RRC CONNECTION RECONFIGURATION COMPLETE to the macro station 30 (step S6). Then, the mobile terminal apparatus 10 sets information (the above parameter of (5)) for measuring CQIs from the downlink reference signals transmitted from the above-noted M selected local stations. After the RRC CONNECTION RECONFIGURATION COMPLETE is received -- that is, after an AMBIGUITY PERIOD, in which it is possible to decide that the configuration of information (parameters) related to the techniques defined in the LTE-A system have been identified is over -- the macro station 30 adopts that configuration.

In this way, by using RRC CONNECTION RECONFIGURATION, the macro station 30 reports local station information about M local stations that are selected based on MEASUREMENT reports to the mobile terminal apparatus 10, so that the mobile terminal apparatus 10 can prepare for measurements of CSI information with respect to the local stations that are selected.

With the reporting method illustrated in FIG. 5B, the mobile terminal apparatus 10 reports the measurement results of the RSRP and so on of DISCOVERY SIGNALS to the macro station 30 or to the local stations 20 by means of MEASUREMENT reports (steps S4 and S4-1). When MEASUREMENT reports are sent from the mobile terminal apparatus 10 to the local stations 20, the local stations 20 transfer the MEASUREMENT reports to the macro station 30.

The macro station 30 selects M local stations to be subject to CSI information feedback based on the MEASUREMENT reports. The RRC CONNECTION RECONFIGURATION, which contains information about the local stations whose CSI information is going to be fed back, to the applicable M local stations 20 (step S5-1). Each local station 20 reports the RRC CONNECTION RECONFIGURATION reported from the macro station 30, to the mobile terminal apparatus 10, independently (step S5-2).

The local stations 20 may receive the MEASUREMENT reports in above step S4-1 and determine, based on their own judgment, whether or not the local stations 20 are locals station that are subject to CSI information feedback. When a local station 20 decides that the local station 20 is a local station whose CSI information is to be fed back, the local station 20 reports RRC CONNECTION RECONFIGURATION containing its local station information to the mobile terminal apparatus 10 independently (step S5-2).

The mobile terminal apparatus 10 acquires the information about the local stations to feed back CSI information, included in the RRC CONNECTION RECONFIGURATION. Then, the mobile terminal apparatus 10 sets the information (the parameter of above (5)) for measuring CQIs, from the downlink reference signals transmitted from the above-noted M selected local stations.

Upon receiving the RRC CONNECTION RECONFIGURATION, the mobile terminal apparatus 10 transmits an RRC CONNECTION RECONFIGURATION COMPLETE to the local stations 20 (step S6-1). The local stations 20 transmit the RRC CONNECTION RECONFIGURATION COMPLETE received from the mobile terminal apparatus 10 to the macro station 30 (step S6-2).

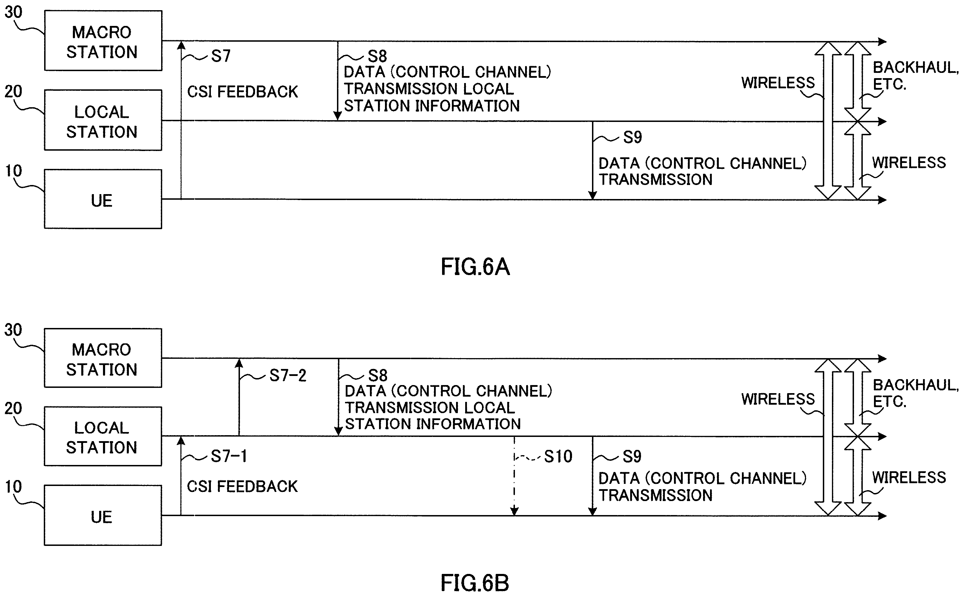

Next, the third aspect of the present disclosure will be described in detail. FIGs. 6A and 6B show methods of determining the local stations to perform data channel (control channel) transmission based on CSI information, and reporting these to the mobile terminal apparatus 10.

The mobile terminal apparatus 10 acquires CSI information with respect to the local stations reported by means of RRC CONNECTION RECONFIGURATION. Consequently, the mobile terminal apparatus 10 executes channel estimation based on downlink reference signals contained in signals transmitted from each transmitting antenna of the local stations 20, and calculates channel estimation values. At this time, the locations of the reference signals for channel quality measurement are specified based on control information that is separately reported by the RRC CONNECTION RECONFIGURATION. To be more specific, CSI-RS arrangement information is acquired, and the transmission subframes and the resource blocks where CSI-RSs are allocated are specified. Then, the channel estimation process is executed assuming that reference signals are arranged in the subcarriers of the specified subframes and resource blocks. Next, using the channel estimation values, CQIs are calculated as channel quality (received quality). Then, the PMI to select the preceding matrix matching the current channel conditions, the RS to support the desired number of transmission streams and so on are determined from a predetermined codebook.

With the reporting method illustrated in FIG. 6A, the macro station 30 determines the local stations to perform data channel (control channel) transmission based on CSI information reported from the mobile terminal apparatus 10. The mobile terminal apparatus 10 designates the macro station 30 as the recipient to which CSI information is to be reported, based on the RRC CONNECTION RECONFIGURATION received in steps S5 and S5-2 shown in FIGs. 5A and 5B. The mobile terminal apparatus 10, after having acquired the CSI information of all local stations reported by the RRC CONNECTION RECONFIGURATION, reports the acquired CSI information to the macro station 30 (step S7).

At this time, the mobile terminal apparatus 10 may feed back all the local stations' CSI information reported by the RRC CONNECTION RECONFIGURATION to the macro station 30, but it is equally possible to feed back CSI information only with respect to the top L local stations 20 of high received quality among the reported local stations 20.

The macro station 30 receives the CSI information of each local station 20 from the mobile terminal apparatus 10 (step S7). Based on the CSI information that is fed back, the macro station 30 determines the local stations to transmit the data channel and the control channel (EPDCCH) to the mobile terminal apparatus 10. The macro station 30 reports local station information for commanding the determined local stations 20 to transmit the data channel and the control channel (EPDCCH) with the mobile terminal apparatus 10 (step S8).

The local stations 20 receive the local station information commanding the transmission of the data channel and the control channel (EPDCCH) from the macro station 30. In the local station information, control information that is required to transmit the data channel and the control channel (EPDCCH) with the mobile terminal apparatus 10 is contained. The local station 20 starts transmitting the data channel and the control channel (EPDCCH) with the mobile terminal apparatus 10 designated in the local station information that is received (step S9).

In the above description, the mobile terminal apparatus 10 feeds back the CSI information of local stations reported by RRC CONNECTION RECONFIGURATION, and the macro station 30 ranks the local stations based on received quality. However, the present disclosure is by no means limited to this configuration. For example, it is equally possible to rank the CSI information of all local stations reported by RRC CONNECTION RECONFIGURATION in the mobile terminal apparatus 10, and report CSI rank information, in which ranking information of CSI and local station IDs are linked with each other, to the macro station 30. By this means, the load of local station selection in the macro station 30 is reduced.

As described above, it is possible to select local stations 20 that are adequate to transmit the data channel and the control channel (EPDCCH) with the mobile terminal apparatus 10, based on CSI information for each local station 20 that is fed back from the mobile terminal apparatus 10 to the macro station 30, and start data channel and control channel (EPDCCH) transmission between the local stations 20 and the mobile terminal apparatus 10.

The reporting method illustrated in FIG. 6B is an example of feeding back CSI information from the mobile terminal apparatus 10 to the local station 20. The mobile terminal apparatus 10 designates the local stations 20 as the recipients to which the CSI information is to be reported, based on the RRC CONNECTION RECONFIGURATION received in steps S5 and S5-2 shown in FIGs. 5A and 5B. The mobile terminal apparatus 10, after having acquired CSI information with respect to the local stations reported by the RRC CONNECTION RECONFIGURATION, reports the acquired CSI information to each local station 20 (step S7-1). For example, a case will be assumed here where CSI information with respect to M local stations 20 is requested by the RRC CONNECTION RECONFIGURATION, and the same M local stations 20 are designated as the recipients to which the CSI information is to be reported. The mobile terminal apparatus 10 measures CQIs with respect to the M local stations 20 that are designated, and also determines the PMIs and RIs, and acquires CSI information with respect to the M local stations 20. If local stations 20 are designated as the recipients to which the CSI information is to be reported, the CSI information is fed back to the local stations 20 (step S7-1).

Here, several methods will be proposed as methods of feeding back CSI information to the local stations 20. CSI feedback on a one-by-one basis can be applied between the mobile terminal apparatus 10 and the local stations 20. In this case, the mobile terminal apparatus 10 feeds back CSI information only to the local stations 20 whose CSI information has been acquired. CSI feedback on a one-by-M basis (sending CSI information of M local stations) can be applied between the mobile terminal apparatus 10 and the local stations 20. In this case, the mobile terminal apparatus 10 reports CSI information of M local stations 20 to each designated local station 20.

The M local stations having received CSI information from the mobile terminal apparatus 10 transfer the CSI information to the macro station 30 (step S7-2). The macro station 30 selects local stations 20 that are adequate to transmit the data channel and the control channel (EPDCCH) with the mobile terminal apparatus 10, from among the M local stations 20, based on the CSI information transferred from the M local stations 20. The macro station 30 reports local station information for commanding the transmission of the data channel and the control channel (EPDCCH) with the mobile terminal apparatus 10, to the determined local stations 20 (step S8).

The local stations 20 receive the local station information commanding the transmission of the data channel and the control channel (EPDCCH) from the macro station 30, and starts data channel and control channel (EPDCCH) transmission with the mobile terminal apparatus 10 designated by the received local station information (step S9).

Although, in the above description, the local stations 20 transfer CSI information to the macro station 30 and the macro station 30 determines the local stations 20 to transmit the data channel and the control channel (EPDCCH), the local stations 20 themselves may determine this. In this case, each local station 20 needs to acquire CSI information of other local stations. To a given local station 20, the mobile terminal apparatus 10 has to feed back CSI information that is acquired in relationship to other local stations 20. When a given local station 20 fails to acquire CSI information of other local stations 20 from the mobile terminal apparatus 10, the correct local stations 20 may not be selected.

The mobile terminal apparatus 10 feeds back information about the ranking of received quality among all the local stations, to the local stations 20 whose CSI information will be fed back. The mobile terminal apparatus 10 learns the CSI information of all local stations by RRC CONNECTION RECONFIGURATION, and sends rank information, which shows what rank each local station's received quality is, to each local station.

When a local station 20 decides by itself whether or not to transmit the data channel and the control channel (EPDCCH) to the mobile terminal apparatus 10 based on CSI information, the local station 20 determines itself to be a local station to transmit the data channel and the control channel (EPDCCH), if its rank information ranks the first. The quality rank of each local station 20 may be reported to that local station 20 independently, or a quality rank list to include other local stations' quality ranks as well may be reported to all the local stations 20.

A local station 20, if its quality rank is the top, transmits the data channel and the control channel (EPDCCH) to the mobile terminal apparatus 10 (step S10).

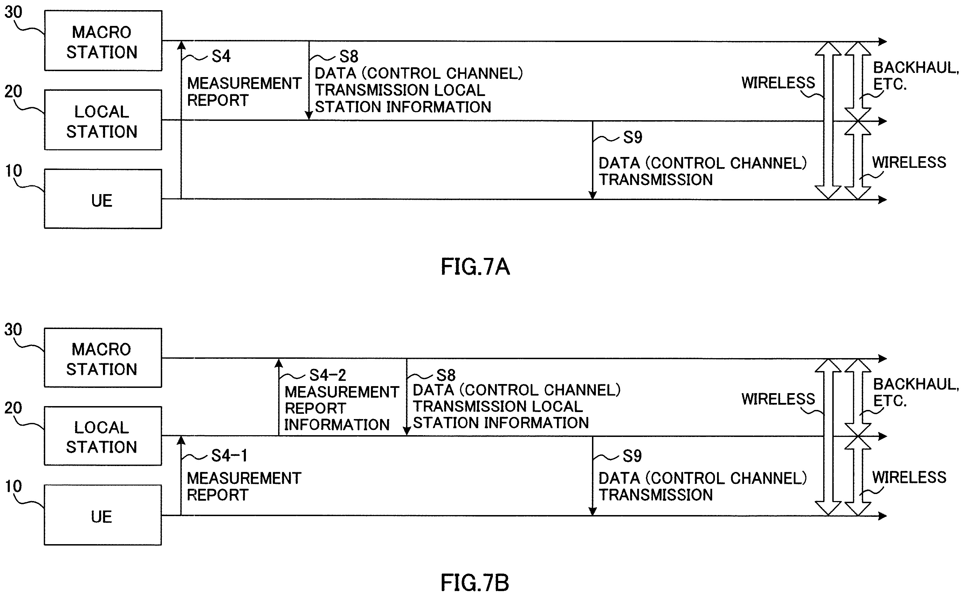

With reference to FIGs. 7A and 7B, the method of determining the local stations to perform data channel (control channel) transmission based on MEASUREMENT reports will be described.

FIG. 7A shows a sequence in which the macro station 30 determines the local stations to perform data channel (control channel) transmission based on MEASUREMENT reports. Although, in the description given above, the macro station 30 (or the local stations 20) determines the local stations to perform data channel (control channel) transmission based on CSI information, it is equally possible to simply receive MEASUREMENT reports and determine the local stations 20.

The macro station 30 reports MEASUREMENT CONFIGURATION, in which a DS reception control signal is contained, to the mobile terminal apparatus 10 via a radio link (step S3 of FIG. 3A). The local stations 20 report MEASUREMENT CONFIGURATION, in which a DS reception control signal is contained, to the mobile terminal apparatus 10 via radio links (step S3-2 of FIG. 3B and step S3-12 of FIG. 4).

In an idle state, upon receiving DISCOVERY SIGNALS from each local station 20, the mobile terminal apparatus 10 carries out MEASUREMENTS of RSRP, RSRQ or RSSI with respect to each DISCOVERY SIGNAL, and reports MEASUREMENT reports to the macro station 30 (step S4).

The macro station 30 receives the MEASUREMENT report for each local station 20 from the mobile terminal apparatus 10 (step S4). The macro station 30 determines the local stations to transmit the data channel and the control channel (EPDCCH) to the mobile terminal apparatus 10 based on the MEASUREMENT reports received. The macro station 30 reports local station information for commanding the transmission of the data channel and the control channel (EPDCCH) with the mobile terminal apparatus 10, to the determined local stations 20 (step S8).

The local stations 20 receive the local station information commanding the transmission of the data channel and the control channel (EPDCCH) from the macro station 30 (step S8), and starts data channel and control channel (EPDCCH) transmission with the mobile terminal apparatus 10 designated in the received local station information (step S9).

FIG. 7B is an example of transferring MEASUREMENT reports from the local stations 20 to the macro station 30 and determining the local stations to transmit the data channel (control channel). Upon receiving DISCOVERY SIGNALS from each local station 20 in an idle state, the mobile terminal apparatus 10 carries out MEASUREMENTS of RSRP, RSRQ or RSSI with respect to each DISCOVERY SIGNAL, and sends MEASUREMENT reports to the local stations 20 (step S4-1). The recipients of the MEASUREMENT reports are taught to the mobile terminal apparatus 10 by means of MEASUREMENT CONFIGURATION.

The local stations 20 receive the MEASUREMENT reports from the mobile terminal apparatus 10 (step S4-1), and transfer the MEASUREMENT reports to the macro station 30 (step S4-2).

The macro station 30 receives the MEASUREMENT report of each local station 20 from the local stations 20 (step S4-2). Based on the MEASUREMENT reports that have arrived, the macro station 30 determines the local stations to transmit the data channel and the control channel (EPDCCH) to the mobile terminal apparatus 10. The macro station 30 reports local station information for commanding the transmission of the data channel and the control channel (EPDCCH) with the mobile terminal apparatus 10, to the determined local stations 20 (step S8).

The local stations 20 having received the MEASUREMENT reports may themselves determine whether or not to transmit the data channel and the control channel (EPDCCH) to the mobile terminal apparatus 10 based on the MEASUREMENT reports.

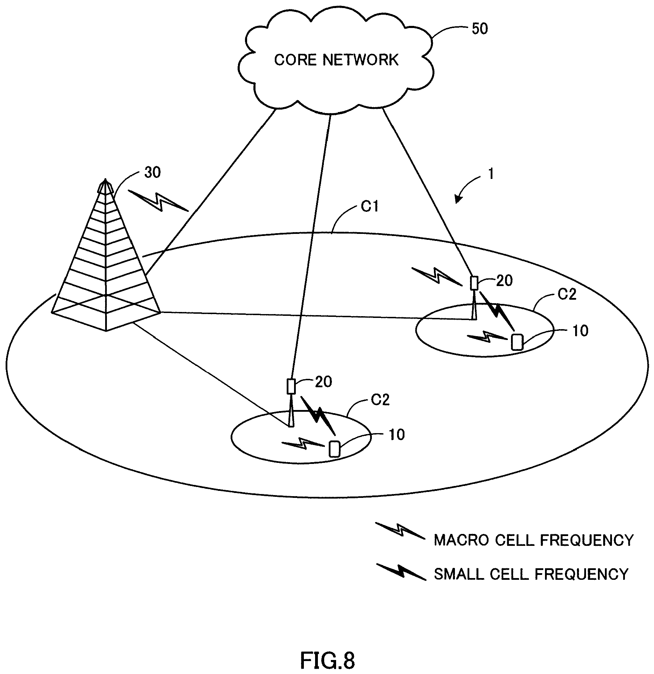

Now, the radio communication system according to the present embodiment will be described in detail. FIG. 8 is a diagram to explain a system configuration of a radio communication system according to the present embodiment. The radio communication system shown in FIG. 8 is a system to accommodate, for example, the LTE system or SUPER 3G. This radio communication system supports carrier aggregation, whereby a plurality of fundamental frequency blocks are grouped into one, using the system band of the LTE system as one unit. This radio communication system may be referred to as "IMT-Advanced," or may be referred to as "4G" or "FRA (Future Radio Access)."

As shown in FIG. 8, the radio communication system 1 has a macro station 30 that covers a macro cell C1, and a plurality of local stations 20 that cover a plurality of small cells C2 that are provided in the macro cell C1. Many mobile terminal apparatuses 10 are placed in the macro cell C1 and in each small cell C2. The mobile terminal apparatus 10 supports the radio communication schemes for the macro cell and the small cells, and are configured to be able to perform radio communication with the macro station 30 and the local stations 20.

Communication between the mobile terminal apparatus 10 and the macro station 30 is conducted using a macro cell frequency (for example, a low frequency band). Communication between the mobile terminal apparatus 10 and the local stations 20 is carried out using a small cell frequency (for example, a high frequency band). The macro station 30 and each local station 20 are connected with each other by wire connection or by wireless connection.

The macro station 30 and each local station 20 are connected with a higher station apparatus, which is not illustrated, and are connected to a core network 50 via the higher station apparatus. The higher station apparatus may be, for example, an access gateway apparatus, a radio network controller (RNC), a mobility management entity (MME) and so on, but is by no means limited to these. The local stations 20 may be connected with the higher station apparatus via the macro station 30.

Although each mobile terminal apparatus 10 may be either an LTE terminal or an LTE-A terminal, the following description will be given simply with respect to a mobile terminal apparatus, unless specified otherwise. Although a mobile terminal apparatus will be described to perform radio communication with the macro station 30 and the local stations 20 for ease of explanation, more generally, user equipment (UE), which may cover both mobile terminal apparatuses and fixed terminal apparatuses, may be used as well. The local stations 20 and the macro station 30 may be referred to as transmission points for the macro cell and the small cells. The local stations 20 may be optical remote base station apparatuses.

In the radio communication system, as radio access schemes, OFDMA (Orthogonal Frequency Division Multiple Access) is applied to the downlink, and SC-FDMA (Single-Carrier Frequency-Division Multiple Access) is applied to the uplink. OFDMA is a multi-carrier transmission scheme to perform communication by dividing a frequency band into a plurality of narrow frequency bands (subcarriers) and mapping data to each subcarrier. SC-FDMA is a single-carrier transmission scheme to reduce interference between terminals by dividing, per terminal, the system band into bands formed with one resource block or continuous resource blocks, and allowing a plurality of terminals to use mutually different bands.

Here, communication channels in the LTE system will be described. Downlink communication channels include a PDSCH (Physical Downlink Shared Channel), which is used by each mobile terminal apparatus 10 on a shared basis, and downlink L1/L2 control channels (PDCCH, PCFICH, PHICH). User data and higher control information are transmitted by the PDSCH. Scheduling information for the PDSCH and the PUSCH and so on is transmitted by the PDCCH (Physical Downlink Control CHannel). The number of OFDM symbols to use for the PDCCH is transmitted by the PCFICH (Physical Control Format Indicator Channel). HARQ ACK and NACK for the PUSCH are transmitted by the PHICH (Physical Hybrid-ARQ Indicator CHannel).

Uplink communication channels include a PUSCH (Physical Uplink Shared Channel), which is used by each mobile terminal apparatus 10 on a shared basis as an uplink data channel, and a PUCCH (Physical Uplink Control Channel), which is an uplink control channel. User data and higher control information are transmitted by this PUSCH. Downlink radio quality information (CQI: Channel Quality Indicator), ACK/NACK and so on are transmitted by the PUCCH.

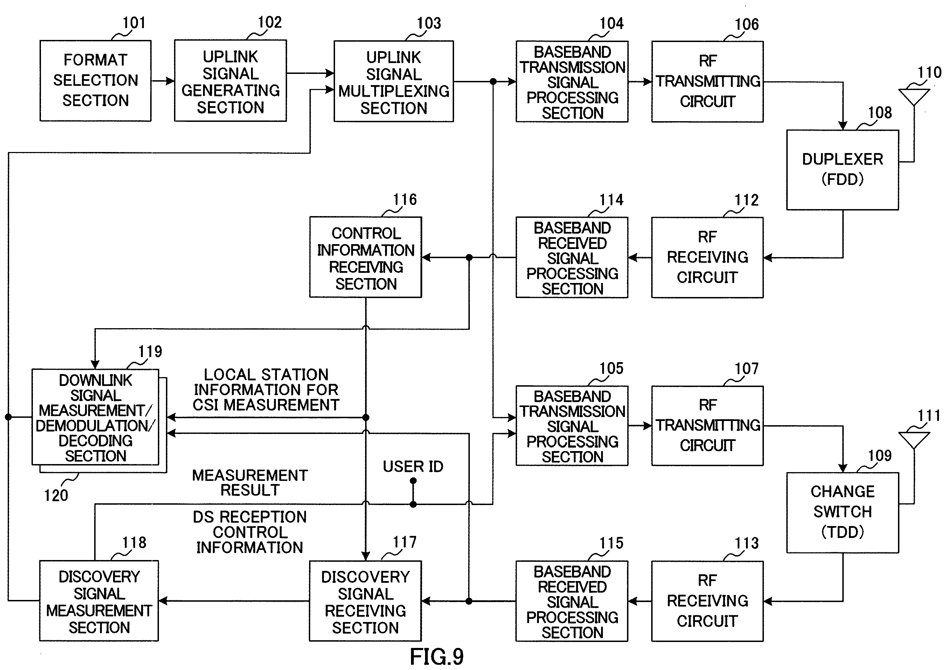

An overall configuration of the mobile terminal apparatuses 10 will be described with reference to FIG. 9. The mobile terminal apparatus 10 has, as processing sections of the transmitting sequence, a format selection section 101, an uplink signal generating section 102, an uplink signal multiplexing section 103, baseband transmission signal processing sections 104 and 105, and RF transmitting circuits 106 and 107.

The format selection section 101 selects the transmission format for the macro cell and the transmission format for the small cells. The uplink signal generating section 102 generates uplink data signals and reference signals. In the event of the transmission format for the macro cell, the uplink signal generating section 102 generates uplink data signals and reference signals for the macro station 30. In the event of the transmission format for the small cells, the uplink signal generating section 102 generates uplink data signals and reference signals for the local stations 20.

The uplink signal multiplexing section 103 multiplexes the uplink transmission data and the reference signals as an uplink signal. The uplink signal multiplexing section 103 multiplexes DISCOVERY SIGNAL MEASUREMENT reports and CSI information acquired with respect to specific local stations as an uplink signal. If the macro station 30 is the recipient to which the DISCOVERY SIGNAL MEASUREMENT reports and the CSI information acquired with respect to specific local stations are to be reported, these uplink signals are input in the baseband transmission signal processing section 104. Uplink signals for the macro station 30 are input in the baseband transmission signal processing section 104, and subjected to digital signal processing. For example, in the event these are uplink signals of the OFDM scheme, the signals are converted from frequency domain signals into time sequence signals through an inverse fast Fourier transform (IFFT), and have cyclic prefixes inserted therein. Then, the uplink signals pass the RF transmitting circuit 106, and are transmitted from a transmitting/receiving antenna 110 for the macro cell, via a duplexer 108 that is provided between the transmitting sequence and the receiving sequence. In the transmitting/receiving sequences for the macro cell, simultaneous transmission/reception is made possible by the duplexer 108.

If the local stations 20 are the recipients to which the DISCOVERY SIGNAL MEASUREMENT reports and the CSI information acquired with respect to specific local stations are to be reported, these uplink signals are input in the baseband transmission signal processing section 105. Uplink signals for the local stations 20 are input in the baseband transmission signal processing section 105, and subjected to digital signal processing. For example, in the event these are uplink signals of the OFDM scheme, the signals are converted from frequency domain signals to time sequence signals through an inverse fast Fourier transform (IFFT), and have cyclic prefixes inserted therein. Then, the uplink signals pass the RF transmitting circuit 107, and are transmitted from a transmitting/receiving antenna 111 for the macro cell, via a change switch 109 that is provided between the transmitting sequence and the receiving sequence. In the transmitting/receiving sequences for the small cells, transmission and reception are switched by the change switch 109.

Although the present embodiment is configured so that the duplexer 108 is provided in the transmission/reception sequences for the macro cell and the change switch 109 is provided in the transmission/reception sequences for the small cells, this configuration is by no means limiting. It is equally possible to provide the change switch 109 in the transmission/reception sequences for the macro cell, or provide the duplexer 108 in the transmission/reception sequences for the small cells. Uplink signals for the macro cell and the small cells may be transmitted simultaneously from the transmitting/receiving antennas 110 and 111, or may be transmitted separately by switching between the transmitting/receiving antennas 110 and 111.

The mobile terminal apparatus 10 has, as processing sections of the receiving sequence, RF receiving circuits 112 and 113, baseband received signal processing sections 114 and 115, a control information receiving section 116, a DISCOVERY SIGNAL receiving section 117, a DISCOVERY SIGNAL measurement section 118, and downlink signal measurement/demodulation/decoding sections 119 and 120.

A downlink signal from the macro station 30 is received in the transmitting/receiving antenna 110 for the macro cell. This downlink signal is input in the baseband received signal processing section 114 via the duplexer 108 and the RF receiving circuit 112, and subjected to digital signal processing. For example, in the event this is a downlink signal of the OFDM scheme, the cyclic prefixes are removed, and the signal is converted from a time sequence signal to a frequency domain signal through a fast Fourier transform (FFT).

The control information receiving section 116 receives various kinds of control information from the downlink signal of the macro cell. Here, a DS reception control signal (MEASUREMENT CONFIGURATION, which contains control information for MEASUREMENT reports), control information (RRC CONNECTION RECONFIGURATION), which contains local station information for feeding back CSI information, and control information for EPDCCH reception are received. The control information receiving section 116 outputs the DS reception control information to the DISCOVERY SIGNAL receiving section 117, outputs the MEASUREMENT report control information to the DISCOVERY SIGNAL measurement section 118, and outputs the EPDCCH reception control information to the downlink signal measurement/demodulation/decoding section 120. The control information containing local station information for feeding back CSI information is output to the downlink signal measurement/demodulation/decoding section 120. These pieces of control information are received by, for example, broadcast information and RRC signaling (higher layer signaling). The downlink data signal of the macro cell is input in the downlink signal measurement/demodulation/decoding section 119, and decoded (descrambled) and demodulated in the downlink signal measurement/demodulation/decoding section 119.

Downlink signals from the local stations 20 are received in the transmitting/receiving antenna 111 for the small cells. The downlink signals are input in the baseband received signal processing section 115 via the change switch 109 and the RF receiving circuit 113, and are subjected to digital signal processing. For example, in the event these are downlink signals of the OFDM scheme, the cyclic prefixes are removed, and the signals are converted from time sequence signals to frequency domain signals through a fast Fourier transform (FFT).

The DISCOVERY SIGNAL receiving section 117 receives DISCOVERY SIGNALS from the local stations 20 based on the DS reception control information input from the control information receiving section 116. In the DS reception control information, radio resource information and signal sequence information for receiving DISCOVERY SIGNALS from each local station 20 are contained. The radio resource information includes, for example, the transmission interval, the frequency locations, the code and so on of the DISCOVERY SIGNALS.

The DISCOVERY SIGNAL measurement section 118 conducts MEASUREMENTS with respect to the DISCOVERY SIGNAL of each local station 20. The objects of the MEASUREMENTS follow the MEASUREMENT report control information. RSRP, RSRQ and RSSI can be made the objects of the MEASUREMENTS. For example, the DISCOVERY SIGNAL measurement section 118 measures, periodically, the received signal power (RSRP) of the DISCOVERY SIGNALS received in the DISCOVERY SIGNAL receiving section 117. The DISCOVERY SIGNAL measurement section 118 transmits MEASUREMENT reports of the DISCOVERY SIGNALS from the local stations 20 to the macro station 30. At this time, among the DISCOVERY SIGNALS from each local station 20, MEASUREMENT reports for the top several stations (for example, the top M stations) of high received signal power may be transmitted to the macro station 30. The MEASUREMENT reports are multiplexed over uplink signals of the macro cell in the uplink signal multiplexing section 103. The MEASUREMENT reports may be transmitted to the local stations 20 as well. In this case, the DISCOVERY SIGNAL measurement section 118 specifies the small cells to be the recipients to which the MEASUREMENT reports are to be transmitted, based on the signal sequences of the DISCOVERY SIGNALS. The MEASUREMENT reports are multiplexed over uplink signals of the small cells in the uplink signal multiplexing section 103.

Downlink data signals of the small cells are input in the downlink signal measurement/demodulation/decoding section 120, and decoded (descrambled) and demodulated in the downlink signal measurement/demodulation/decoding section 120. When control information that contains local station information for feeding back CSI information is reported to the mobile terminal apparatus 10 by means of RRC CONNECTION RECONFIGURATION, the downlink signal measurement/demodulation/decoding section 120 acquires CSI information with respect to the local stations designated by the control information. The CSI information acquired then is fed back to the macro station 30, as shown in FIG. 6A. When the CSI information is fed back to the macro station 30, the CSI information is multiplexed upon macro cell uplink signals in the uplink signal multiplexing section 103. As shown in FIG. 6B, it is equally possible to feed back CSI information to the local stations 20. In this case, the CSI information is multiplexed over small cell uplink signals in the uplink signal multiplexing section 103.

The downlink signal measurement/demodulation/decoding section 120 decodes (descrambles) and demodulates the downlink control signal (EPDCCH) of the small cells based on the EPDCCH reception control information input from the control information receiving section 116. The EPDCCH reception control information includes, for example, radio resource information and DM-RS sequence information for reception from the local station 20 by means of the EPDCCH. The radio resource information includes, for example, the transmission interval, the frequency location, and the code of the EPDCCH.

Downlink signals of the macro cell and the small cells may be received simultaneously from the transmitting/receiving antennas 110 and 111, or may be received separately by switching between the transmitting/receiving antennas 110 and 111.

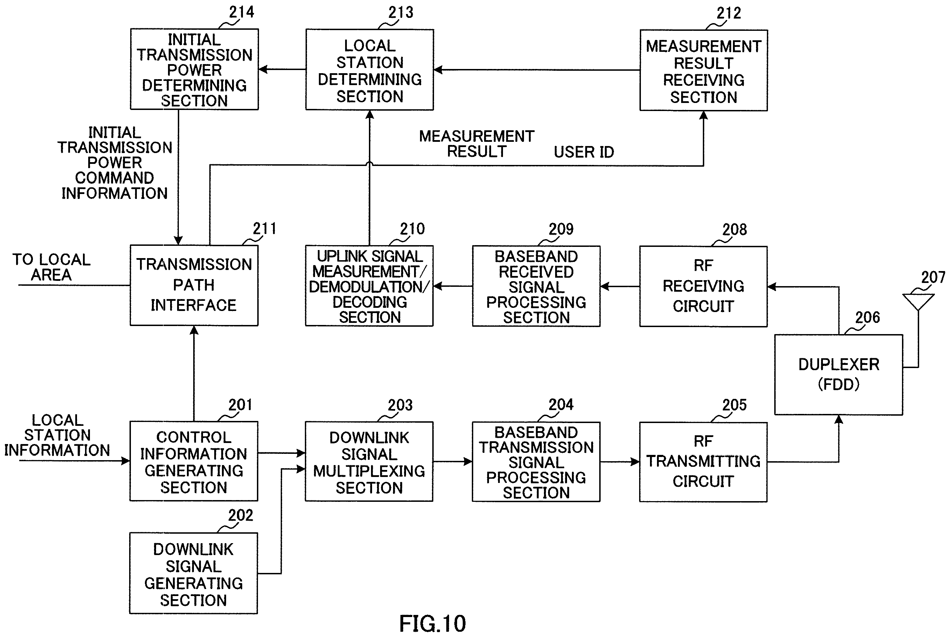

An overall configuration of the macro station 30 will be described with reference to FIG. 10. The macro station 30 has, as processing sections of the transmitting sequence, a control information generating section 201, a downlink signal generating section 202, a downlink signal multiplexing section 203, a baseband transmission signal processing section 204, and an RF transmitting circuit 205.

The control information generating section 201 generates, as macro cell control information, DS transmission control information, DS reception control information and information related to MEASUREMENTS (MEASUREMENT CONFIGURATION), control information (RRC CONNECTION RECONFIGURATION) that contains local station information for feeding back CSI information, and EPDCCH reception control information. The control information generating section 201 outputs the DS transmission control information to the transmission path interface 211, and outputs the DS reception control information, the control information containing local station information for feeding back CSI information, and the EPDCCH reception control information to the downlink signal multiplexing section 203. The DS transmission control information is transmitted to the local stations 20 via the transmission path interface 211. Meanwhile, the DS reception control information, the control information that contains control information for feeding back CSI information, and the EPDCCH reception control information are transmitted to the mobile terminal apparatus 10 via the downlink signal multiplexing section 203.

The uplink signal generating section 202 generates downlink data signals and reference signals. The downlink signal multiplexing section 203 multiplexes the macro cell control information, and the downlink data signals and downlink reference signals as a macro cell downlink signal. The macro cell downlink signal for the mobile terminal apparatus 10 is input in the baseband transmission signal processing section 204, and subjected to digital signal processing. For example, in the event this is a downlink signal of the OFDM scheme, the signal is converted from a frequency domain signal to a time sequence signal through an inverse fast Fourier transform (IFFT), and has cyclic prefixes inserted therein. Then, the downlink signal passes the RF transmitting circuit 205, and is transmitted from the transmitting/receiving antenna 207 via a duplexer 206 that is provided between the transmitting sequence and the receiving sequence.

The macro station 30 has, as processing sections of the receiving sequence, an RF receiving circuit 208, a baseband received signal processing section 209, an uplink signal demodulation/decoding section 210, a measurement result receiving section 212, a local station determining section 213, and an initial transmission power determining section 214.

An uplink signal from the mobile terminal apparatus 10 is received in the transmitting/receiving antenna 207, and input in the baseband received signal processing section 209 via the duplexer 206 and the RF receiving circuit 208. In the baseband received signal processing section 209, the uplink signal is subjected to digital signal processing. For example, in the event this is an uplink signal of the OFDM scheme, the cyclic prefixes are removed, and the signal is converted from a time sequence signal to a frequency domain signal through a fast Fourier transform (FFT). The uplink data signal is input in the uplink signal demodulation/decoding section 210, and decoded (descrambled) and demodulated in the uplink signal demodulation/decoding section 210. The uplink signal demodulation/decoding section 210 decodes the DISCOVERY SIGNAL MEASUREMENT reports and CSI information with respect to the local stations, transmitted from the mobile terminal apparatus 10 as uplink signals, and outputs the results to the local station determining section 213.

The measurement result receiving section 212 receives the MEASUREMENT reports transferred from the local stations 20, and the CSI information fed back to each local station, via the transmission path interface 211. The measurement result receiving section 212 outputs the DISCOVERY SIGNAL MEASUREMENT reports, the user IDs and the CSI information, to the local station determining section 213. When no MEASUREMENT report is transferred from the local stations to the macro station 30, the function of the measurement result receiving section 212 may be omitted.

The local station determining section 213 selects the local stations to feed back CSI information from, based on indicators such as the received signal power of each local station 20 shown in the DISCOVERY SIGNAL MEASUREMENT reports. That is, the local stations to be objects whose CSI information is to be acquired are selected in the mobile terminal apparatus 10. The local station determining section 213 determines the local stations 20 to transmit the data channel and the control channel with the mobile terminal apparatus 10, based on the CSI information that is fed back later. The local station information related to the local stations whose CSI information is to be acquired, and the local station information related to the local stations that are determined as local stations 20 to transmit the data channel (control channel), are output to the control information generating section 201. Here, the local station determining section 213 selects the local station 20 to be objects whose CSI information is going to be acquired, based on the received signal power and user IDs of the top several stations. The control information generating section 201 generates RRC CONNECTION RECONFIGURATION information containing the local station information.

The initial transmission power determining section 214 determines the initial transmission power (EPDCCH/PDSCH) for the local stations 20 based on the DISCOVERY SIGNAL measurement results (received signal power). The initial transmission power determining section 214 transmits initial transmission power command information to the local stations 20 to be the target of connection for the mobile terminal apparatus 10 via the transmission path interface 211.

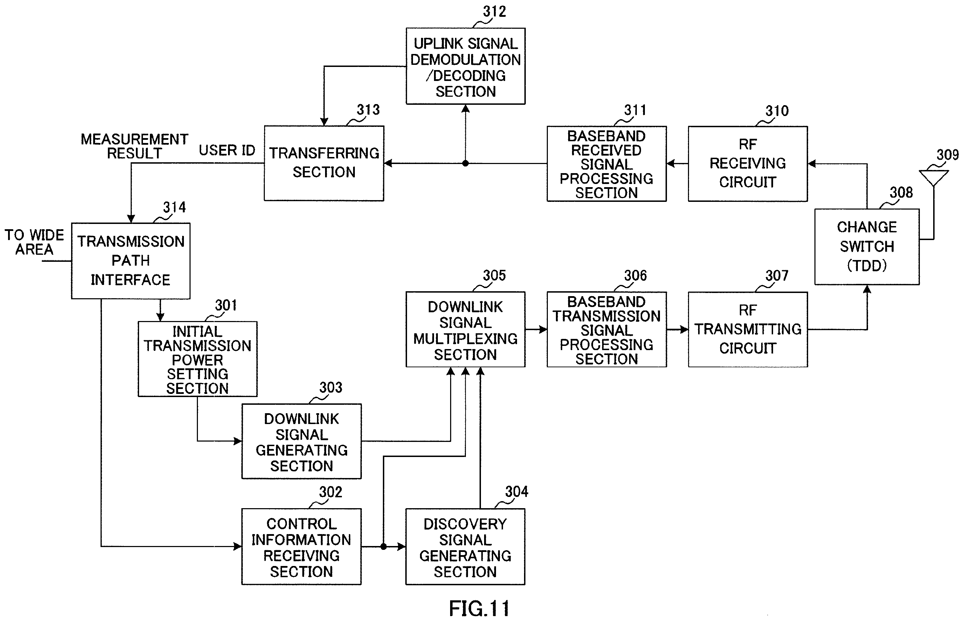

An overall configuration of a local station 20 will be described with reference to FIG. 11. Assume that the local station 20 is placed very close to the mobile terminal apparatus 10. The local station 20 has an initial transmission power setting section 301 and a control information receiving section 302. The local station 20 has, as processing sections of the transmitting sequence, a downlink signal generating section 303, a DISCOVERY SIGNAL generating section 304, a downlink signal multiplexing section 305, a baseband transmission signal processing section 306, and an RF transmitting circuit 307.

The initial transmission power setting section 301 receives initial transmission power command information from the macro station 30 via the transmission path interface 314. The initial transmission power setting section 301 sets the initial transmission power of the downlink data signal (PDSCH) and the downlink control signal (EPDCCH), based on the initial transmission power command information. The control information receiving section 302 receives macro cell control information from the macro station 30 via the transmission path interface 314. Here, as the macro cell control information, DS transmission control information is received. The control information receiving section 302 outputs the DS transmission control information to the DISCOVERY SIGNAL generating section 304. When the local station 20 transfers DS reception control information, MEASUREMENT CONFIGURATION that contains MEASUREMENT report control information, and RRC CONNECTION RECONFIGURATION that contains local station information for feeding back CSI information to the mobile terminal apparatus 10, MEASUREMENT CONFIGURATION information and RRC CONNECTION RECONFIGURATION information including these pieces of control information are output to the downlink signal multiplexing section 305.

The downlink signal generating section 303 generates the downlink data signal (PDSCH), downlink reference signals, and the downlink control signal (EPDCCH). In relationship to this downlink signal generating section 303, the initial transmission power setting section 301 sets the initial transmission power of the downlink data signal and the downlink control signal. The DISCOVERY SIGNAL generating section 304 generates DISCOVERY SIGNALS based on the DS transmission control information input from the control information receiving section 302. In the DS transmission control information, radio resource information, signal sequence information and so on for transmitting the DISCOVERY SIGNALS to the mobile terminal apparatus 10 are included. The radio resource information includes, for example, the transmission interval, the frequency locations, the code and so on of the DISCOVERY SIGNALS.

The downlink signal multiplexing section 305 multiplexes the downlink transmission data, the downlink reference signal, and the downlink control signal. When there are MEASUREMENT CONFIGURATION information and RRC CONNECTION RECONFIGURATION information, these signals are multiplexed over downlink signals of the small cells. A downlink signal for the mobile terminal apparatus 10 is input in the baseband transmission signal processing section 306, and subjected to digital signal processing. For example, in the event this is a downlink signal of the OFDM scheme, the signal is converted from a frequency domain signal to a time sequence signal through an inverse fast Fourier transform (IFFT), and has cyclic prefixes inserted therein. Then, the downlink signal passes the RF transmitting circuit 307, and is transmitted from a transmitting/receiving antenna 309 via the change switch 308 that is provided between the transmitting sequence and the receiving sequence. A duplexer may be provided instead of the change switch 308.

The local station 20 has, as processing sections of the receiving sequence, an RF receiving circuit 310, a baseband received signal processing section 311, an uplink signal demodulation/decoding section 312, and a transferring section 313.

Uplink signals for the small cells from the mobile terminal apparatus 10 are received in the transmitting/receiving antenna 309 for the small cells, and input in the baseband received signal processing section 311 via the change switch 308 and RF receiving circuit 310. In the baseband received signal processing section 311, the uplink signals are subjected to digital signal processing. For example, in the event these are uplink signals of the OFDM scheme, the cyclic prefixes are removed, and the signals are converted from time sequence signals to frequency domain signals through a fast Fourier transform (FFT). The uplink data signal is input in the uplink signal demodulation/decoding section 312, and decoded (descrambled) and demodulated in the uplink signal demodulation/decoding section 312. When the mobile terminal apparatus 10 sends MEASUREMENT reports to the local station 20, the DISCOVERY SIGNAL MEASUREMENT reports are decoded from the uplink signal. When the mobile terminal apparatus 10 feeds back CSI information to the local stations 20, the CSI information is decoded from the uplink signal.

The transferring section 313 transfers the MEASUREMENT reports and the CSI information decoded from the uplink signal, to the macro station 30, via the transmission path interface 314. The MEASUREMENT reports are not transferred if the local stations 20 determine on their own the local stations whose CSI information will be fed back, based on the MEASUREMENT reports. Similarly, the CSI information is not transferred if the local stations 20 determine on their own the local stations to transmit the data channel and the control channel based on the CSI information.

Then, when a local station 20 is determined by the macro station 30 to be a local station to transmit the data channel and the control channel, a command to transmit the data channel and the control channel with the mobile terminal apparatus 10 is reported via the transmission path interface 314.

As described above, with the radio communication system 1 according to the present embodiment, a DS reception control signal is reported from the macro station 30 or the local stations 20 to the mobile terminal apparatus 10 by means of MEASUREMENT CONFIGURATION, so that the mobile terminal apparatus 10 can receive DISCOVERY SIGNALS from the local stations 20, to which the mobile terminal apparatus 10 is unable to gain initial access, and conduct DISCOVERY SIGNAL MEASUREMENTS with respect to each local station 20. The mobile terminal apparatus 10 can acquire CSI information with respect to local stations 20 that are reported by means of RRC CONNECTION RECONFIGURATION and feed back the CSI information to the macro station 30 or the local stations 20, so that the mobile terminal apparatus 10, which has no opportunity to gain initial access to the small cells, can start data channel and control channel transmission with adequate local stations that are determined based on the CSI information or DISCOVERY SIGNAL MEASUREMENT reports.

The present invention is by no means limited to the above embodiment and can be implemented in various modifications. For example, it is possible to change the number of carriers, the carrier bandwidth, the signaling method, the number of processing sections and the order of processing steps in the above description as appropriate, and still implement the present invention without departing from the scope of the present claims. Besides, the present invention can be implemented with various changes, without departing from the scope of the present claims.

## Claims

1. A communication system comprising a macro base station apparatus (30) that forms a macro cell (M), a plurality of local base station apparatuses (20) that are connected with the macro base station apparatus via a communication link and that form small cells (S) in the macro cell, and a mobile terminal apparatus (10) that is configured to communicate with the macro base station apparatus using a radio communication scheme for the macro cell, and that can communicate with each local base station apparatus (20) using a radio communication scheme for the small cells, wherein:
each local base station apparatus (20) is configured to transmit a reference signal to be used to detect the local base station apparatuses, to the mobile terminal apparatus, in the radio communication scheme for the small cells;
the macro base station apparatus (30) is configured to transmit first control information, in which information that is required for measurements of reference signals transmitted from each local base station apparatus and for reporting of said measurements is defined, to the mobile terminal apparatus; and
the mobile terminal apparatus is configured to measure the reference signals transmitted from each local base station apparatus (20) based on the first control information, and to report measurement results to the macro base station apparatus (30) or the local base station apparatuses based on the first control information, the communication system being **characterized in that** the macro base station apparatus (30) is configured to transmit the first control information to the mobile terminal apparatus (10) via each local base station apparatus,
or to transmit a part of the first control information to the mobile terminal apparatus directly, and to transmit another part of the first control information to the mobile terminal apparatus (10) via each local base station apparatus.

2. The communication system according to claim 1, wherein the first control information comprises identification information of one or more local base stations that are subject to the measurements of the reference signals.

3. The communication system according to claim 1, wherein the first control information comprises identification information of one or more local base stations that are not subject to the measurements of the reference signals.

4. The communication system according to claim 1, wherein, upon receiving the measurement results of the reference signals from the mobile terminal apparatus (10), the macro base station apparatus (30) selects a plurality of candidate local base station apparatuses (20) based on the measurement results of the reference signals, and transmits second control information, in which information that is required to feed back channel state information of the candidate local base station apparatuses is defined, to the mobile terminal apparatus (10).

5. The communication system according to claim 4, wherein the macro base station apparatus (30) is configured to transmit the second control information to the mobile terminal apparatus (10) via each candidate local base station apparatus (20).

6. The communication system according to claim 4, wherein:
the mobile terminal apparatus (10) is configured to acquire the channel state information of the candidate local base station apparatuses (20) based on the second control information and to feed back the channel state information to the macro base station apparatus (30);
and
the macro base station apparatus (30) is configured to determine a local base station apparatus (20) to transmit a data channel or a control channel to the mobile terminal apparatus, from among the plurality of candidate local base station apparatuses, based on the channel state information of the candidate local base station apparatuses that is fed back.

7. The communication system according to claim 4, wherein the mobile terminal apparatus (10) is configured to acquire the channel state information of the candidate local base station apparatuses (20) based on the second control information, and to feed back channel state information of top M candidate local base station apparatuses of high received quality, to the macro base station apparatus (30).

8. The communication system according to claim 4, wherein:
the mobile terminal apparatus (10) is configured to acquire the channel state information of the candidate local base station apparatuses (20) based on the second control information, and to feed back the channel state information to each candidate local base station apparatus; and
each candidate local base station apparatus is configured to transfer the channel state information between the mobile terminal apparatus and the candidate local station apparatus, fed back from the mobile terminal apparatus, to the macro base station apparatus (30); and
the macro base station apparatus (30) is configured to determine a local base station apparatus to transmit a data channel or a control channel to the mobile terminal apparatus, from among the plurality of candidate local base station apparatuses, based on the channel state information of the candidate local base station apparatuses that is fed back.

9. The communication system according to claim 4, wherein:
the mobile terminal apparatus (10) is configured to acquire the channel state information of the candidate local base station apparatuses (20) based on the second control information, and to feed back the channel state information to each candidate local base station apparatus; and
each candidate local base station apparatus is configured to determine whether or not the candidate local base station apparatus is a local base station apparatus to transmit a data channel or a control channel to the mobile terminal apparatus, based on the channel state information between the mobile terminal apparatus and the candidate local station apparatus, fed back from the mobile terminal apparatus.

10. The communication system according to claim 4, wherein the mobile terminal apparatus (10) is configured to acquire the channel state information of the candidate local base station apparatuses based on the second control information, and to feed back rank information of received quality to each candidate local base station apparatus.

11. The communication system according to claim 1, wherein, upon receiving the measurement results of the reference signals from the mobile terminal apparatus (10), the macro base station apparatus (30) determines a local base station apparatus (20) to transmit a data channel or a control channel to the mobile terminal apparatus based on the measurement results.

12. The communication system according to claim 1, wherein, upon receiving the measurement results of the reference signals from the mobile terminal apparatus (10), each candidate local base station apparatus transfers the measurement results to the macro base station apparatus(30); and
the macro base station apparatus (30) determines a local base station apparatus to transmit a data channel or a control channel transmission to the mobile terminal apparatus based on the measurement results of the reference signals transferred from each candidate local base station apparatus.

13. A macro base station apparatus (30) that is connected with a plurality of local base station apparatuses (20) that form small cells in a macro cell via a communication link, and that is configured to communicate with a mobile terminal apparatus (10) using a radio communication scheme for the macro cell, the macro base station apparatus (30) comprising:
a first control information generating section configured to generate first control information, in which information that is required for measurements of reference signals transmitted from each local base station apparatus in a radio communication scheme for the small cells and for reporting said measurements is defined;
a receiving section configured to receive measurement results of the reference signals from the mobile terminal apparatus;
a second control information generating section configured to generate second control information, in which information that is required to feed back channel state information of candidate local base station apparatuses selected based on the received measurement results is defined; and
a transmission section configured to transmit the generated first and second control information to the mobile terminal apparatus the macro base station apparatus being **characterized in that**
it is configured to transmit the first control information to the mobile terminal apparatus (10) via each local base station apparatus,
or to transmit a part of the first control information to the mobile terminal apparatus (10) directly, and another part of the first control information to the mobile terminal apparatus via each local base station apparatus.

14. A mobile terminal apparatus (10) configured to communicate with a macro base station apparatus (30) forming a macro cell, using a radio communication scheme for the macro cell, and to communicate with a plurality of local base station apparatuses (20) that are connected with the macro base station (30) apparatus via a communication link and that form small cells in the macro cell, using a radio communication scheme for the small cells, the mobile terminal apparatus comprising:
a control information receiving section configured to detect first control information, in which information that is required for measurements of reference signals transmitted from each local base station apparatus using the radio communication scheme for the small cells and for reporting said measurements is defined, and second control information, in which information that is required to feed back channel state information of candidate local base station apparatuses is defined;
a first measurement section configured to measure the reference signals transmitted from each local base station apparatus based on the first control information;
a second measurement section configured to acquire the channel state information of the candidate local base station apparatuses based on the second control information; and
a transmission section configured to transmit measurement results of the reference signals based on the first control information, and to transmit the channel state information of the candidate local base station apparatuses based on the second control information,
the mobile terminal apparatus being **characterized in that**
the control information receiving section is configured to receive the first control information via each local base station apparatus,
or to receive a part of the first control information from the macro base station apparatus (30) directly, and to receive another part of the first control information from each local base station apparatus.

15. A communication method in a communication system comprising a macro base station apparatus (30) that forms a macro cell, a plurality of local base station apparatuses (20) that are connected with the macro base station apparatus (30) via a communication link and that form small cells in the macro cell, and a mobile terminal apparatus (10) that can communicate with the macro base station apparatus (30) using a radio communication scheme for the macro cell, and that can communicate with each local base station apparatus using a radio communication scheme for the small cells, the communication method comprising the steps in which:
each local base station apparatus transmits a reference signal to be used to detect the local base station apparatuses, to the mobile terminal apparatus, using the radio communication scheme for the small cells;
the macro base station apparatus (30) transmits first control information, in which information that is required for measurements of reference signals transmitted from each local base station apparatus and for reporting said measurements is defined, to the mobile terminal apparatus; and
the mobile terminal apparatus measures the reference signals transmitted from each local base station apparatus based on the first control information, and reports measurement results to the macro base station apparatus (30) or the small cell base station apparatuses based on said first control information, said method **characterized in that**
the macro base station (30) apparatus transmits the first control information to the mobile terminal apparatus (10) via each local base station apparatus,
or transmits a part of the first control information to the mobile terminal apparatus (10) directly, and transmits another part of the first control information to the mobile terminal apparatus via each local base station apparatus.

## Patentansprüche

1. Kommunikationssystem umfassend eine Macro-Basisstationsvorrichtung (30), die eine Macrozelle (M) bildet, eine Vielzahl von lokalen Basisstationsvorrichtungen (20), die mit der Macro-Basisstationsvorrichtung über eine Kommunikationsverbindung verbunden sind und die kleine Zellen (S) in der Macrozelle bilden, und eine mobile Endgerätvorrichtung (10), die konfiguriert ist zum
Kommunizieren mit der Macro-Basisstationsvorrichtung unter Verwendung eines Kommunikationsschemas für die Macrozelle und die mit jeder lokalen Basisstationsvorrichtung (20) unter Verwendung eines Funkkommunikationsschemas für die kleinen Zellen kommunizieren kann, wobei:
jede lokale Basisstationsvorrichtung (20) konfiguriert ist, um ein Referenzsignal, das zu verwenden ist, um die lokalen Basisstationsvorrichtungen zu erkennen, an die mobile Endgerätvorrichtung in dem Funkkommunikationsschema für die kleinen Zellen zu übertragen;
die Macro-Basisstationsvorrichtung (30) konfiguriert ist, um eine erste Steuerinformation, in der eine Information definiert ist, die für Messungen von Referenzsignalen, die von jeder lokalen Basisstationsvorrichtung übertragen werden, und zum Berichten der Messungen erforderlich ist, an die mobile Endgerätvorrichtung zu übertragen; und
die mobile Endgerätvorrichtung konfiguriert ist zum Messen der Referenzsignale, die von jeder lokalen Basisstationsvorrichtung (20) übertragen werden, basierend auf der ersten Steuerinformation,
und zum Berichten von Messergebnissen an die Macro-Basisstationsvorrichtung (30) oder die lokale Basisstationsvorrichtungen basierend auf der ersten Steuerinformation,
wobei das Kommunikationssystem **dadurch gekennzeichnet ist, dass** die Macro-Basisstationsvorrichtung (30) konfiguriert ist, um die erste Steuerinformation an die mobile Endgerätvorrichtung (10) über jede lokale Basisstationsvorrichtung zu übertragen,
oder um einen Teil der ersten Steuerinformation direkt an die mobile Endgerätvorrichtung zu übertragen und einen anderen Teil der ersten Steuerinformation an die mobile Endgerätvorrichtung (10) über jede lokale Basisstationsvorrichtung zu übertragen.

2. Kommunikationssystem nach Anspruch 1, wobei die erste Steuerinformation Identifikationsinformation von einer oder mehreren lokalen Basisstationen, die Gegenstand der Messungen der Referenzsignale sind, umfasst.

3. Kommunikationssystem nach Anspruch 1, wobei die erste Steuerinformation Identifikationsinformation von einer oder mehreren lokalen Basisstationen, die nicht Gegenstand der Messungen der Referenzsignale sind, umfasst.

4. Kommunikationssystem nach Anspruch 1, wobei bei einem Empfangen der Messergebnisse der Referenzsignale von der mobilen Endgerätvorrichtung (10) die Macro-Basisstationsvorrichtung (30) eine Vielzahl von lokalen Kandidatenbasisstationsvorrichtungen (20) basierend auf den Messergebnissen der Referenzsignale auswählt und eine zweite Steuerinformation, in der eine Information definiert ist, die zum Rückmelden von Kanalzustandsinformation der lokalen Kandidatenbasisstationsvorrichtungen erforderlich ist, an die mobile Endgerätvorrichtung (10) überträgt.

5. Kommunikationssystem nach Anspruch 4, wobei die Macro-Basisstationsvorrichtung (30) konfiguriert ist, um die zweite Steuerinformation an die mobile Endgerätvorrichtung (10) über jede lokale Kandidatenbasisstationsvorrichtung (20) zu übertragen.

6. Kommunikationssystem nach Anspruch 4, wobei:
die mobile Endgerätvorrichtung (10) konfiguriert ist, um die Kanalzustandsinformation von den lokalen Kandidatenbasisstationsvorrichtungen (20) basierend auf der zweiten Steuerinformation zu erlangen und die Kanalzustandsinformation an die Macro-Basisstationsvorrichtung (30) rückzumelden; und
die Macro-Basisstationsvorrichtung (30) konfiguriert ist, um eine lokale Basisstationsvorrichtung (20), um einen Datenkanal oder einen Steuerkanal an die mobile Endgerätvorrichtung zu übertragen, aus der Vielzahl von lokalen Kandidatenbasisstationsvorrichtungen basierend auf der rückgemeldeten Kanalzustandsinformation der lokalen Kandidatenbasisstationsvorrichtungen zu bestimmen.

7. Kommunikationssystem nach Anspruch 4, wobei die mobile Endgerätvorrichtung (10) konfiguriert ist, um die Kanalzustandsinformation von den lokalen Kandidatenbasisstationsvorrichtungen (20) basierend auf der zweiten Steuerinformation zu erlangen und die Kanalzustandsinformation von Top M lokalen Kandidatenbasisstationsvorrichtungen von hoher empfangener Qualität an die Macro-Basisstationsvorrichtung (30) rückzumelden.

8. Kommunikationssystem nach Anspruch 4, wobei:
die mobile Endgerätvorrichtung (10) konfiguriert ist, um die Kanalzustandsinformation von den lokalen Kandidatenbasisstationsvorrichtungen (20) basierend auf der zweiten Steuerinformation zu erlangen und die Kanalzustandsinformation an jede lokale Kandidatenbasisstationsvorrichtung rückzumelden; und
jede lokale Kandidatenbasisstationsvorrichtung konfiguriert ist, um die Kanalzustandsinformation zwischen der mobilen Endgerätvorrichtung und der lokalen Kandidatenstationsvorrichtung, rückgemeldet von der mobilen Endgerätvorrichtung, an die Macro-Basisstationsvorrichtung (30) zu übertragen; und
die Macro-Basisstationsvorrichtung (30) konfiguriert ist, um eine lokale Basisstationsvorrichtung, um einen Datenkanal oder einen Steuerkanal an die mobile Endgerätvorrichtung zu übertragen, aus der Vielzahl von lokalen Kandidatenbasisstationsvorrichtungen basierend auf der rückgemeldeten Kanalzustandsinformation von den lokalen Kandidatenbasisstationsvorrichtungen zu bestimmen.

9. Kommunikationssystem nach Anspruch 4, wobei:
die mobile Endgerätvorrichtung (10) konfiguriert ist, um die Kanalzustandsinformation von den lokalen Kandidatenbasisstationsvorrichtungen (20) basierend auf der zweiten Steuerinformation zu erlangen und die Kanalzustandsinformation an jede lokale Kandidatenbasisstationsvorrichtung rückzumelden; und
jede lokale Kandidatenbasisstationsvorrichtung konfiguriert ist zum Bestimmen, ob die lokale Kandidatenbasisstationsvorrichtung eine lokale Basisstationsvorrichtung, um einen Datenkanal oder einen Steuerkanal an die mobile Endgerätvorrichtung zu übertragen, ist oder nicht, basierend auf der Kanalzustandsinformation zwischen der mobilen Endgerätvorrichtung und der lokalen Kandidatenstationsvorrichtung, rückgemeldet von der mobilen Endgerätvorrichtung.

10. Kommunikationssystem nach Anspruch 4, wobei die mobile Endgerätvorrichtung (10) konfiguriert ist, um die Kanalzustandsinformation von den lokalen Kandidatenbasisstationsvorrichtungen basierend auf der zweiten Steuerinformation zu erlangen und Ranginformation von empfangener Qualität an jede lokale Kandidatenbasisstationsvorrichtung rückzumelden.

11. Kommunikationssystem nach Anspruch 1, wobei bei einem Empfangen der Messergebnisse der Referenzsignale von der mobilen Endgerätvorrichtung (10) die Macro-Basisstationsvorrichtung (30) eine lokale Basisstationsvorrichtung (20), um einen Datenkanal oder einen Steuerkanal an die mobile Endgerätvorrichtung zu übertragen, basierend auf den Messergebnissen bestimmt.

12. Kommunikationssystem nach Anspruch 1, wobei bei einem Empfangen der Messergebnisse der Referenzsignale von der mobilen Endgerätvorrichtung (10) jede lokale Kandidatenbasisstationsvorrichtung die Messergebnisse an die Macro-Basisstationsvorrichtung (30) überträgt; und
die Macro-Basisstationsvorrichtung (30) eine lokale Basisstationsvorrichtung, um eine Datenkanal- oder Steuerkanalübertragung an die mobile Endgerätvorrichtung zu übertragen, basierend auf den Messergebnissen der von jeder lokalen Kandidatenbasisstationsvorrichtung übertragenen Referenzsignale bestimmt.

13. Macro-Basisstationsvorrichtung (30), die mit einer Vielzahl von lokalen Basisstationsvorrichtungen (20), die kleine Zellen in einer Macrozelle bilden, über eine Kommunikationsverbindung verbunden ist und die konfiguriert ist, um mit einer mobilen Endgerätvorrichtung (10) unter Verwendung eines Funkkommunikationsschemas für die Macrozelle zu kommunizieren, wobei die Macro-Basisstationsvorrichtung (30) umfasst:
einen ersten Steuerinformationsgenerierungsabschnitt, der konfiguriert ist, um erste Steuerinformation, in der eine Information definiert ist, die für Messungen von Referenzsignalen, die von jeder lokalen Basisstationsvorrichtung in einem Funkkommunikationsschema für kleine Zellen und zum Berichten der Messungen erforderlich ist, zu generieren;
einen Empfangsabschnitt, der konfiguriert ist, um Messergebnisse der Referenzsignale von der mobilen Endgerätvorrichtung zu empfangen;
einen zweiten Steuerinformationsgenerierungsabschnitt, der konfiguriert ist, um eine zweite Steuerinformation, in der eine Information definiert ist, die zum Rückmelden von Kanalzustandsinformation von lokalen Kandidatenbasisstationsvorrichtungen, ausgewählt basierend auf den empfangenen Messergebnissen, erforderlich ist, zu generieren; und
einen Übertragungsabschnitt, der konfiguriert ist, um die generierten ersten und zweiten Steuerinformationen an die mobile Endgerätvorrichtung zu übertragen,
wobei die Macro-Basisstationsvorrichtung **dadurch gekennzeichnet ist, dass**
sie konfiguriert ist, um die erste Steuerinformation an die mobile Endgerätvorrichtung (10) über jede lokale Basisstationsvorrichtung zu übertragen oder einen Teil der ersten Steuerinformation direkt an die mobile Endgerätvorrichtung (10) und einen anderen Teil der ersten Steuerinformation an die mobile Endgerätvorrichtung über jede lokale Basisstationsvorrichtung zu übertragen.

14. Mobile Endgerätvorrichtung (10), die konfiguriert ist, um mit einer Macro-Basisstationsvorrichtung (30), die eine Macrozelle bildet, unter Verwendung eines Funkkommunikationsschemas für die Macrozelle zu kommunizieren und mit einer Vielzahl von lokalen Basisstationsvorrichtungen (20), die mit der Macro-Basisstationsvorrichtung (30) über eine Kommunikationsverbindung verbunden sind und kleine Zellen in der Macrozelle bilden, unter Verwendung eines Funkkommunikationsschemas für die kleinen Zellen zu kommunizieren, wobei die mobile Endgerätvorrichtung umfasst:
einen Steuerinformationsempfangsabschnitt, der konfiguriert ist, um eine erste Steuerinformation, in der eine Information definiert ist, die für Messungen von Referenzsignalen, die von jeder lokalen Basisstationsvorrichtung unter Verwendung des Funkkommunikationsschemas für die kleinen Zellen übertragen werden, und zum Berichten der Messungen erforderlich ist, und eine zweite Steuerinformation, in der eine Information definiert ist, die zum Rückmelden von Kanalzustandsinformation von lokalen Kandidatenbasisstationsvorrichtungen erforderlich ist, zu erkennen;
einen ersten Messabschnitt, der konfiguriert ist, um die Referenzsignale, die von jeder lokalen Basisstationsvorrichtung übertragen werden, basierend auf der ersten Steuerinformation zu messen;
einen zweiten Messabschnitt, der konfiguriert ist, um die Kanalzustandsinformation von den lokalen Kandidatenbasisstationsvorrichtungen basierend auf der zweiten Steuerinformation zu erlangen; und
einen Übertragungsabschnitt, der konfiguriert ist, um Messergebnisse der Referenzsignale basierend auf der ersten Steuerinformation zu übertragen und die Kanalzustandsinformation von den lokalen Kandidatenbasisstationsvorrichtungen basierend auf der zweiten Steuerinformation zu übertragen;
wobei die mobile Endgerätvorrichtung **dadurch gekennzeichnet ist, dass**
der Steuerinformationsempfangsabschnitt konfiguriert ist, um die erste Steuerinformation über jede lokale Basisstationsvorrichtung zu empfangen
oder einen Teil der ersten Steuerinformation direkt von der Macro-Basisstationsvorrichtung (30) und einen anderen Teil der ersten Steuerinformation von jeder lokalen Basisstationsvorrichtung zu empfangen.

15. Kommunikationsverfahren in einem Kommunikationssystem umfassend eine Macro-Basisstationsvorrichtung (30), die eine Macrozelle bildet, eine Vielzahl von lokalen Basisstationsvorrichtungen (20), die mit der Macro-Basisstationsvorrichtung (30) über eine Kommunikationsverbindung verbunden sind und die kleine Zellen in der Macrozelle bilden, und eine mobile Endgerätvorrichtung (10), die mit der Macro-Basisstationsvorrichtung (30) unter Verwendung eines Funkkommunikationsschemas für die Macrozelle kommunizieren kann und die mit jeder lokalen Basisstationsvorrichtung unter Verwendung eines Funkkommunikationsschemas für die kleinen Zellen kommunizieren kann, wobei das Kommunikationsverfahren die Schritte umfasst, in denen:
jede lokale Basisstationsvorrichtung ein Referenzsignal, das zu verwenden ist, um die lokalen Basisstationsvorrichtungen zu erkennen, unter Verwendung des Funkkommunikationsschemas für die kleinen Zellen an die mobile Endgerätvorrichtung überträgt;
die Macro-Basisstationsvorrichtung (30) eine erste Steuerinformation, in der eine Information definiert ist, die für Messungen von Referenzsignalen, die von jeder lokalen Basisstationsvorrichtung übertragen werden, und zum Berichten der Messungen erforderlich ist, an die mobile Endgerätvorrichtung überträgt; und
die mobile Endgerätvorrichtung die Referenzsignale, die von jeder lokalen Basisstationsvorrichtung übertragen werden, basierend auf der ersten Steuerinformation misst und Messergebnisse an die Macro-Basisstationsvorrichtung (30) oder die Kleinzellenbasisstationsvorrichtungen basierend auf der ersten Steuerinformation berichtet, wobei das Verfahren **dadurch gekennzeichnet ist, dass**
die Macro-Basisstationsvorrichtung (30) die erste Steuerinformation über jede lokale Basisstationsvorrichtung an die mobile Endgerätvorrichtung (10) überträgt,
oder einen Teil der ersten Steuerinformation direkt an die mobile Endgerätvorrichtung (10) überträgt und einen anderen Teil der ersten Steuerinformation über jede lokale Basisstationsvorrichtung an die mobile Endgerätvorrichtung überträgt.

## Revendications

1. Système de communication comprenant un appareil formant macrostation de base (30) qui forme une macrocellule (M), une pluralité d'appareils formant station de base locale (20) qui sont reliés à l'appareil formant macrostation de base par l'intermédiaire d'une liaison de communication et qui forment de petites cellules (S) dans la macrocellule, et un appareil formant terminal mobile (10) qui est configuré pour communiquer avec l'appareil formant macrostation de base en utilisant un plan de radiocommunication pour la macrocellule, et qui peut communiquer avec chaque appareil formant station de base locale (20) en utilisant un plan de radiocommunication pour les petites cellules, dans lequel :
chaque appareil formant station de base locale (20) est configuré pour émettre un signal de référence à utiliser pour détecter les appareils formant station de base locale, vers l'appareil formant terminal mobile, dans le plan de radiocommunication pour les petites cellules ;
l'appareil formant macrostation de base (30) est configuré pour émettre des premières informations de commande, dans lesquelles des informations qui sont nécessaires pour des mesures de signaux de référence émis en provenance de chaque appareil formant station de base locale et pour rapporter lesdites mesures sont définies, vers l'appareil formant terminal mobile; et
l'appareil formant terminal mobile est configuré pour mesurer les signaux de référence émis en provenance de chaque appareil formant station de base locale (20) sur la base des premières informations de commande, et pour rapporter des résultats de mesure à l'appareil formant macrostation de base (30) ou aux appareils formant station de base locale sur la base des premières informations de commande,
le système de communication étant **caractérisé en ce que**
l'appareil formant macrostation de base (30) est configuré pour émettre les premières informations de commande vers l'appareil formant terminal mobile (10) par l'intermédiaire de chaque appareil formant station de base locale,
ou pour émettre une partie des premières informations de commande vers l'appareil formant terminal mobile directement, et pour émettre une autre partie des premières informations de commande à l'appareil formant terminal mobile (10) par l'intermédiaire de chaque appareil formant station de base locale.

2. Système de communication selon la revendication 1, dans lequel les premières informations de commande comprennent des informations d'identification d'une ou plusieurs stations de base locales qui sont soumises aux mesures des signaux de référence.

3. Système de communication selon la revendication 1, dans lequel les premières informations de commande comprennent des informations d'identification d'une ou plusieurs stations de base locales qui ne sont pas soumises aux mesures des signaux de référence.

4. Système de communication selon la revendication 1, dans lequel, lors de la réception des résultats de mesure des signaux de référence en provenance de l'appareil formant terminal mobile (10), l'appareil formant macrostation de base (30) sélectionne une pluralité d'appareils formant station de base locale candidats (20) sur la base des résultats de mesure des signaux de référence, et émet des secondes informations de commande, dans lesquelles des informations qui sont nécessaires pour retransmettre des informations d'état de canal des appareils formant station de base locale candidats sont définies, vers l'appareil formant terminal mobile (10).

5. Système de communication selon la revendication 4, dans lequel l'appareil formant macrostation de base (30) est configuré pour émettre les secondes informations de commande vers l'appareil terminal mobile (10) par l'intermédiaire de chaque appareil de station de base locale candidat (20).

6. Système de communication selon la revendication 4, dans lequel :
l'appareil formant terminal mobile (10) est configuré pour acquérir les informations d'état de canal des appareils formant station de base locale candidats (20) sur la base des secondes informations de commande et retransmettre les informations d'état de canal à l'appareil formant macrostation de base (30) ; et
l'appareil formant macrostation de base (30) est configuré pour déterminer un appareil formant station de base locale (20) pour émettre un canal de données ou un canal de commande vers l'appareil formant terminal mobile, parmi la pluralité d'appareils formant station de base locale candidats, sur la base des informations d'état de canal des appareils formant station de base locale candidats qui sont retransmises.

7. Système de communication selon la revendication 4, dans lequel l'appareil formant terminal mobile (10) est configuré pour acquérir les informations d'état de canal des appareils formant station de base locale candidats (20) sur la base des secondes informations de commande, et pour retransmettre des informations d'état de canal de M appareils formant station de base locale candidats supérieurs de qualité reçue élevée, à l'appareil formant macrostation de base (30).

8. Système de communication selon la revendication 4, dans lequel :
l'appareil formant terminal mobile (10) est configuré pour acquérir les informations d'état de canal des appareils formant station de base locale candidats (20) sur la base des secondes informations de commande, et pour retransmettre les informations d'état de canal à chaque appareil formant station de base locale candidat; et
chaque appareil formant station de base locale candidat est configuré pour transférer les informations d'état de canal entre l'appareil formant terminal mobile et l'appareil formant station locale candidat, retransmises depuis l'appareil formant terminal mobile, à l'appareil formant macrostation de base (30) ; et
l'appareil formant macrostation de base (30) est configuré pour déterminer un appareil formant station de base locale pour émettre un canal de données ou un canal de commande vers l'appareil formant terminal mobile, parmi la pluralité d'appareils formant station de base locale candidats, sur la base des informations d'état de canal des appareils formant station de base locale candidats qui sont retransmises.

9. Système de communication selon la revendication 4, dans lequel:
l'appareil formant terminal mobile (10) est configuré pour acquérir les informations d'état de canal des appareils formant station de base locale candidats (20) sur la base des secondes informations de commande, et pour retransmettre les informations d'état de canal à chaque appareil formant station de base locale candidat ; et
chaque appareil formant station de base locale candidat est configuré pour déterminer si l'appareil formant station de base locale candidat est ou non un appareil formant station de base locale pour émettre un canal de données ou un canal de commande à l'appareil formant terminal mobile, sur la base des informations d'état de canal entre l'appareil formant terminal mobile et l'appareil formant station locale candidat, retransmises en provenance de l'appareil formant terminal mobile.

10. Système de communication selon la revendication 4, dans lequel l'appareil formant terminal mobile (10) est configuré pour acquérir les informations d'état de canal des appareils formant station de base locale candidats sur la base des secondes informations de commande, et pour retransmettre des informations de rang de qualité reçue à chaque appareil formant station de base locale candidat.

11. Système de communication selon la revendication 1, dans lequel, lors de la réception des résultats de mesure des signaux de référence en provenance de l'appareil formant terminal mobile (10), l'appareil formant macrostation de base (30) détermine un appareil formant station de base locale (20) pour émettre un canal de données ou un canal de commande à l'appareil formant terminal mobile sur la base des résultats de mesure.

12. Système de communication selon la revendication 1, dans lequel, lors de la réception des résultats de mesure des signaux de référence en provenance de l'appareil formant terminal mobile (10), chaque appareil formant station de base locale candidat transfère les résultats de mesure à l'appareil formant macrostation de base (30) ; et
l'appareil formant macrostation de base (30) détermine un appareil formant station de base locale pour émettre un canal de données ou une émission de canal de commande vers l'appareil formant terminal mobile sur la base des résultats de mesure des signaux de référence transférés en provenance de chaque appareil formant station de base locale candidat.

13. Appareil formant macrostation de base (30) qui est relié à une pluralité d'appareils formant station de base locale (20) qui forment de petites cellules dans une macrocellule par l'intermédiaire d'une liaison de communication, et qui est configuré pour communiquer avec un appareil formant terminal mobile (10) en utilisant un plan de radiocommunication pour la macrocellule, l'appareil formant macrostation de base (30) comprenant :
une section de production de premières informations de commande configurée pour produire des premières informations de commande, dans lesquelles des informations qui sont nécessaires pour des mesures de signaux de référence émis en provenance de chaque appareil formant station de base locale dans un plan de radiocommunication pour les petites cellules et pour rapporter lesdites mesures sont définies ;
une section de réception configurée pour recevoir des résultats de mesure des signaux de référence en provenance de l'appareil formant terminal mobile ;
une section de production de secondes informations de commande configurée pour produire de secondes informations de commande, dans lesquelles des informations qui sont nécessaires pour retransmettre des informations d'état de canal d'appareils formant station de base locale candidats sélectionnés sur la base des résultats de mesure reçus sont définies ; et
une section d'émission configurée pour émettre les premières et secondes informations de commande produites à l'appareil formant terminal mobile
l'appareil formant macrostation de base étant **caractérisé en ce que**
il est configuré pour émettre les premières informations de commande à l'appareil formant terminal mobile (10) par l'intermédiaire de chaque appareil formant station de base locale,
ou pour émettre une partie des premières informations de commande à l'appareil formant terminal mobile (10) directement, et une autre partie des premières informations de commande à l'appareil formant terminal mobile par l'intermédiaire de chaque appareil formant station de base locale.

14. Appareil formant terminal mobile (10) configuré pour communiquer avec un appareil formant macrostation de base (30) formant une macrocellule, en utilisant un plan de radiocommunication pour la macrocellule, et pour communiquer avec une pluralité d'appareils formant station de base locale (20) qui sont reliés à l'appareil formant macrostation de base (30) par l'intermédiaire d'une liaison de communication et qui forment de petites cellules dans la macrocellule, en utilisant un plan de radiocommunication pour les petites cellules, l'appareil formant terminal mobile comprenant :
une section de réception d'informations de commande configurée pour détecter des premières informations de commande, dans lesquelles des informations qui sont nécessaires pour des mesures de signaux de référence émis en provenance de chaque appareil formant station de base locale en utilisant le plan de radiocommunication pour les petites cellules et pour rapporter lesdites mesures sont définies, et des secondes informations de commande, dans lesquelles des informations qui sont nécessaires pour retransmettre des informations d'état de canal d'appareils formant station de base locale candidats sont définies ;
une première section de mesure configurée pour mesurer les signaux de référence émis en provenance de chaque appareil formant station de base locale sur la base des premières informations de commande;
une seconde section de mesure configurée pour acquérir les informations d'état de canal des appareils formant station de base locale candidats sur la base des secondes informations de commande ; et
une section d'émission configurée pour émettre des résultats de mesure des signaux de référence sur la base des premières informations de commande, et pour émettre les informations d'état de canal des appareils formant station de base locale candidats sur la base des secondes informations de commande,
l'appareil formant terminal mobile étant **caractérisé en ce que**
la section de réception d'informations de commande est configurée pour recevoir les premières informations de commande par l'intermédiaire de chaque appareil formant station de base locale,
ou pour recevoir une partie des premières informations de commande en provenance de l'appareil formant macrostation de base (30) directement, et pour recevoir une autre partie des premières informations de commande en provenance de chaque appareil formant station de base locale.

15. Procédé de communication dans un système de communication comprenant un appareil formant macrostation de base (30) qui forme une macrocellule, une pluralité d'appareils formant station de base locale (20) qui sont reliés à l'appareil formant macrostation de base (30) par l'intermédiaire d'une liaison de communication et qui forment de petites cellules dans la macrocellule, et un appareil formant terminal mobile (10) qui peut communiquer avec l'appareil formant macrostation de base (30) en utilisant un plan de radiocommunication pour la macrocellule, et qui peut communiquer avec chaque appareil formant station de base locale en utilisant un plan de radiocommunication pour les petites cellules, le procédé de communication comprenant les étapes dans lesquelles :
chaque appareil formant station de base locale émet un signal de référence à utiliser pour détecter les appareils formant station de base locale, vers l'appareil formant terminal mobile, en utilisant le plan de radiocommunication pour les petites cellules ;
l'appareil formant macrostation de base (30) émet des premières informations de commande, dans lesquelles des informations qui sont nécessaires pour des mesures de signaux de référence émis en provenance de chaque appareil formant station de base locale et pour rapporter lesdites mesures sont définies, vers l'appareil formant terminal mobile ; et
l'appareil formant terminal mobile mesure les signaux de référence émis en provenance de chaque appareil formant station de base locale sur la base des premières informations de commande, et rapporte des résultats de mesure à l'appareil formant macrostation de base (30) ou aux appareils formant station de base de petite cellule sur la base desdites premières informations de commande, ledit procédé étant **caractérisé en ce que**
l'appareil formant macrostation de base (30) émet les premières informations de commande vers l'appareil formant terminal mobile (10) par l'intermédiaire de chaque appareil formant station de base locale,
ou émet une partie des premières informations de commande à l'appareil formant terminal mobile (10) directement, et émet une autre partie des premières informations de commande à l'appareil formant terminal mobile par l'intermédiaire de chaque appareil formant station de base locale.
